# EUROPÄISCHE PATENTSCHRIFT

(11) **EP 1 564 160 B1**
(45) Veröffentlichungstag und Bekanntmachung des Hinweises auf die Patenterteilung: **03.05.2006**
(21) Anmeldenummer: 05002954.5
(22) Anmeldetag: 11.02.2005
(51) Int. Cl.: B65G 1/137

(54) **Vorrichtung zum Lagern von Waren**
Apparatus for storing articles
Dispositif de stockage d'objets

(30) Priorität: 16.02.2004 DE 102004007694; 16.02.2004 DE 102004007692; 23.09.2004 DE 102004046176
(43) Veröffentlichungstag der Anmeldung: 17.08.2005
(73) Patentinhaber: KHT Kommissionier- und Handhabungstechnik GmbH, 45881 Gelsenkirchen (DE)
(72) Erfinder: Gessner, Jürgen, Dr., 42781 Haan (DE); Patek, Mario, 47239 Duisburg (DE); Porten, Andreas, 58453 Witten (DE); von Schneidemesser, Christian, 45133 Essen (DE)
(74) Vertreter: Berg, Peter

(56) Entgegenhaltungen:
- DE-A1- 10 102 999
- DE-A1- 19 509 951
- GB-A- 1 157 071
- US-A- 5 174 454
- US-A1- 2003 116 480

## Beschreibung

Die Erfindung betrifft eine Vorrichtung zum rechnergesteuerten Ein- und Auslagern von Gegenständen gemäß dem Gattungsbegriff des Patentanspruchs 1.

Eine gattungsgemäße Vorrichtung lässt sich im Wesentlichen entnehmen aus der DE 195 09 951 C2, die eine Vorrichtung beschreibt, welche insbesondere zur automatischen unsortierten Lagerung von kleinteiligen, quaderförmigen Packungen wie Arzneimittelpackungen vorgesehen ist. Diese Vorrichtung weist eine Übergabevorrichtung in Form eines Endlos-Förderers auf, der sich innerhalb des Regals zwischen zwei Regalböden erstreckt und die einzulagernden Gegenstände von einer Aufgabestation bis in den Arbeitsbereich eines Regalbediengeräts führt. Der Endlos-Förderer, der insbesondere als Förderband ausgebildet ist, führt dabei von der Schmalseite der Regalanlage, an der die Aufgabestation für die Waren (auch als Gegenstände bezeichnet) angeordnet ist, in den mit zahlreichen übereinander angeordneten Regalböden versehenen Regalbereich hinein und verlängert damit zwangsläufig die Baulänge des ohnehin im Regelfall lang gestreckten Regals. Der Endlos-Förderer hat nicht nur die Aufgabe, die neu einzulagernden Waren in den Arbeitsbereich des Regalbediengeräts von außen hineinzuführen, sondern soll darüber hinaus auch eine gewisse Pufferfunktion für den Strom der einzulagernden Gegenstände wahrnehmen. Die neu einzulagernden Gegenstände werden nämlich nicht nur vor der Aufnahme durch das Regalbediengerät identifiziert (Barcode der Verpackung lesen), sondern werden auch hinsichtlich ihrer Abmessungen vermessen, damit ein geeigneter Lagerplatz von der Steuereinheit (auch als Rechnersteuerung bezeichnet) der Lagervorrichtung gefunden werden kann. Sowohl die Identifizierung als auch die Vermessung der Gegenstände kann in an sich bekannter Weise vollständig maschinell ausgeführt werden. Zur Verminderung des Anlagenaufwandes ist es jedoch vielfach üblich, die Identifizierung im Rahmen eines Handhabungsvorgangs von einer Bedienperson vornehmen zu lassen, die den Barcode des Gegenstands an einem entsprechenden Lesegerät vorbeiführt und dann den Gegenstand auf den Endlos-Förderer auflegt. Nach Beendigung des Auflegens neu einzulagernder Gegenstände oder nach Erreichen einer vollständigen Belegung des Endlos-Förderers, auf dem die Gegenstände einzeln in einer Kette nebeneinander im Abstand aufgelegt sind, werden die Gegenstände nacheinander durch das Regalbediengerät aufgenommen und auf einen freien Lagerplatz eines der Regalböden, d.h. in der Fläche nebeneinander liegend eingelagert. Die Positionen, an denen die einzelnen Gegenstände auf dem Endlos-Förderer liegen sind der Rechnersteuerung für den gezielten Zugriff des Regalbediengeräts bekannt. Bei der Einlagerung besteht die Möglichkeit des wahlfreien Zugriffs des Regalbediengeräts auf die einzulagernden Gegenstände auf dem Endlos-Förderer. Sobald ein am äußersten Ende des Endlos-Förderers aufliegender Gegenstand dabei abgeräumt wurde, kann im Bedarfsfall ein weiterer neu einzulagernder Gegenstand nach Durchführung einer entsprechenden Vorschubbewegung auf dem Endlos-Förderer abgelegt werden. Solange aber das äußerste Ende des Endlosförderers belegt bleibt, darf keine Vorschubbewegung ausgeführt werden, so dass dann trotz an sich freier Plätze z.B. im Mittelbereich oder am Anfang des Endlos-Förderers keine neuen Gegenstände am Aufgabeende des Endlos-Förderers aufgelegt werden können. Bei der Einlagerung steht der Endlos-Förderer zumindest während des Anfahrens einer Ablageposition auf dem Endlos-Förderer durch das Regalbediengerät still. Im Falle der Einlagerung umfangreicher Sendungen mit neu einzulagernden Waren kann es daher wegen des begrenzten Fassungsvermögens des Endlos-Förderers vorkommen, dass die Einlagerung durch die Bedienperson in mehreren Teilschritten mit entsprechender Wartezeit dazwischen vorgenommen werden muss. Diese Wartezeit ist umso länger, je größer der Zeitbedarf vom Ergreifen einzelner Gegenstände auf dem Endlos-Förderer bis zur endgültigen Einlagerung auf einem der Regalböden ist. Bei dieser bekannten Lagereinrichtung werden üblicherweise Lagerböden mit einer Tiefe von bis zu etwa 250 mm benutzt. Im Regelfall werden die einzelnen Gegenstände in Richtung der Längserstreckung der Regalböden, also in Fahrtrichtung des Regalbediengeräts jeweils einzeln nebeneinander abgelegt. Bei gleichartigen Artikeln können auch, sofern der verfügbare Platz ausreicht, zwei Gegenstände unter Ausnutzung der Breite des jeweiligen Regalbodens in Richtung der Breite hintereinander abgelegt werden.

Aus der DE 102 25 332 A1 ist ein Einlagerungspuffer bekannt, der anstelle eines Endlos-Förderers bei einer im Übrigen aus der genannten DE 195 09 951 C2 bekannten Lagereinrichtung verwendet werden kann. Dieser Einlagerungspuffer weist eine Vielzahl von bewegbaren, miteinander gekoppelten, im Wesentlichen gleichartigen Lagerflächen auf, die mit einem Antrieb verbunden sind und zwischen mehreren Stationen umlaufen können, beispielsweise in Form eines Paternosters, der an der Schmalseite der Regalanlage angeordnet ist. Daher wird die Baulänge der gesamten Anlage entsprechen vergrößert. Die spezielle Gestaltung des Einlagerungspuffers ermöglicht ein einfaches, beliebiges Auflegen der einzelnen neu einzulagernden Gegenstände auf einer der Lagerflächen des Paternosters. Im Bereich einer Umlagerungsvorrichtung können die manuell unausgerichtet aufgelegten Gegenstände identifiziert und in ihren Abmessungen vermessen werden und darüber hinaus durch eine entsprechende Greifeinrichtung in ihrer Lage verändert und in eine für das Regalbediengerät definierte Position gebracht werden. Wie bei dem bekannten Endlos-Förderer muss auch bei dem Paternoster während der Entnahme neu einzulagernder Gegenstände durch das Regalbediengerät ein Stillstand des Förderers, also des Paternosters, gewährleistet sein. In entsprechender Weise muss ein solcher Stillstand auch andauern, wenn die Umlagervorrichtung ihre Arbeit noch nicht beendet hat, das Regalbediengerät aber die in seinem Zugriffsbereich liegenden Lagerflächen des Paternosters bereits abgeräumt hat. Insofern können sich die einzelnen Vorgänge einschließlich des manuellen Auflegens neuer Gegenstände durch die Bedienperson gegenseitig behindern.

Aufgabe der vorliegenden Erfindung ist es, eine gattungsgemäße Vorrichtung so weiterzubilden, dass unter Beibehaltung einer vergleichsweise kurzen Baulänge der Regalanlage die eigentliche Einlagerung aus dem Einlagerungspuffer und das Aufgeben neuer Gegenstände noch leistungsfähiger und möglichst verzögerungsfrei erfolgen können.

Gelöst wird diese Aufgabe erfindungsgemäß durch eine Vorrichtung mit den Merkmalen des Patentanspruchs 1. In den Unteransprüchen sind vorteilhafte Weiterbildungen der erfindungsgemäßen Vorrichtung mit ihren Merkmalen gekennzeichnet, die-in beliebiger Weise miteinander kombinierbar sind.

Die vorliegende Erfindung sieht bei einer gattungsgemäßen Vorrichtung vor, dass die Übergabevorrichtung, mit der die Bereitstellung der an einer Aufgabestation außerhalb des Regals aufgegebenen und auf den Regalböden abzulegenden Waren im Arbeitsbereich mindestens eines Regalbediengeräts erfolgt, mindestens zwei Übergabetische aufweist, auf denen die neu einzulagernden Waren in definierten Zwischenablagepositionen zwischenlagerbar sind. Die Übergabetische sind jeweils zwischen einem Übernahmebereich für die Übernahme (Beladung) der von außerhalb des Regals kommenden neu einzulagernden Waren und mindestens einer Entnahmeposition (Entladung), an der die Entnahme von zwischengelagerten Waren durch das Regalbediengerät erfolgen kann, bewegbar. Im Unterschied zum gattungsgemäßen Stand der Technik wird also bewusst kein Endlos-Förderer eingesetzt, bei dem zwangsläufig stets gleichzeitig die an der Aufgabestation neu aufgelegten Waren und die bereits im Übernahmebereich befindlichen Waren gleichzeitig bewegt werden. Die Erfindung stellt somit sicher, dass während der Übernahme von auf dem Übergabetisch jeweils zwischengelagerten Waren durch das Regalbediengerät der Übergabetisch auf jeden Fall im Stillstand verharrt. Außerdem ist es nicht mehr notwendig einen Endlos-Förderer an der Schmalseite der Regalanlage zur Zuführung der neu einzulagernden Waren anzuordnen, wodurch die Baulänge der Gesamtanlage vergrößert würde. Vielmehr ist es ohne weiteres möglich, die Übergabevorrichtung für die Zuleitung neu einzulagernder Waren an der Längsseite der Regalanlage anzuordnen.

In einer ersten Grundvariante der Erfindung sind die Übergabetische entlang der Regalböden hin und her bewegbar, während eine zweite Grundvariante vorsieht, dass als Übergabetisch eine Mehrzahl von Tablaren eingesetzt werden, die mittels einer Ladevorrichtung vertikal verfahrbar sind.

Um einen gezielten Zugriff des jeweiligen Regalbediengeräts auf jede neu einzulagernde Ware auf dem Übergabetisch zu gewährleisten, sind erfindungsgemäß Mittel vorgesehen, die Informationen über die jeweiligen Zwischenablagepositionen auf dem Übergabetisch (bzw. einem als Übergabetisch dienenden Tablar) an die Steuereinheit weiterleiten. Das bedeutet also, dass direkt oder indirekt die Zwischenablageposition auf dem jeweiligen Übergabetisch ermittelt und festgehalten werden muss und dass die Steuereinheit darüber hinaus auch über direkte oder indirekte Informationen darüber verfügen muss, in welchem Maß sich der Übergabetisch nach Ablage der neu einzulagernden Waren bis zum Erreichen seiner Entnahmeposition, in der das Regalbediengerät seine Zugriffe ausführt, verschoben hat. Hierfür sind geeignete Mess- und Steuergeräte einsetzbar, die dem Fachmann bekannt sind.

Vorzugsweise wird der Übergabetisch jeweils während der Dauer der Übernahme der zwischengelagerten Waren in seiner Entnahmeposition arretiert, beispielsweise durch einen Anschlag.

Weiterhin ist gemäß der Erfindung vorgesehen, dass jeweils mindestens einer der Übergabetische in dem Übernahmebereich sukzessive in Übernahmepositionen (Beladepositionen) für die Übernahme von außen zugeführter neu einzulagernder Waren und mindestens ein anderer Übergabetisch stattdessen jeweils in mindestens einer Entnahmeposition (Entladeposition) bringbar oder in dieser haltbar ist. Daher besteht der große Vorteil, dass gleichzeitig zum einen neu einzulagernde Ware auf einem Übergabetisch zwischengelagert und zum anderen die Entnahme von zwischengelagerten Waren von einem Übergabetisch zur Durchführung der Einlagerung auf den Regalböden vorgenommen werden kann. Beide Vorgänge sind funktionell völlig unabhängig und können sich daher in keiner weise gegenseitig stören.

Grundsätzlich ist es möglich, dass zwei Übergabetische jeweils dieselbe Fahrspur benutzen. In diesem Fall haben die beiden Übergabetische zweckmäßigerweise eine Breite, die annähernd der Breite (Tiefe) der einzelnen Regalböden entspricht. Wenn gleichzeitig in bevorzugter Weiterbildung der Erfindung die Übergabevorrichtung und somit auch der Übernahmebereich, in dem sich die Übergabetische während der Aufgabe der zwischenzulagernden Waren befinden, im mittleren Bereich der Regalanlage bezogen auf deren Längserstreckung angeordnet ist, dann bedeutet dies, dass im Regelfall der eine Übergabetisch eine oder gegebenenfalls auch mehrere Entnahmepositionen in der linken Hälfte des Regals und der andere Übergabetisch eine oder mehrere Entnahmepositionen in der rechten Hälfte des Regals während der Entnahme der zwischengelagerten Waren durch das Regalbediengerät einnimmt. Grundsätzlich können je nach Abmessung des Regals die beiden Übergabetische aber auch Positionen in der jeweils anderen Hälfte des Regals anfahren. Sie können lediglich nicht aneinander vorbeifahren.

Letzteres, also ein gegenseitiges Passieren zweier Übergabetische ist jedoch in einer anderen bevorzugten Ausführungsform der Erfindung möglich, bei der die beiden Übergabetische auf zwei parallelen voneinander beabstandeten Fahrspuren über die gesamte Länge des Regals hin und her bewegbar sind. Dabei kann vorgesehen sein, dass die Bewegungen der beiden Übergabetische durch die Steuereinheit wahlweise so miteinander koppelbar sind, dass die beiden Übergabetische einen gemeinsamen, bewegbaren Übergabetisch bilden, sich in dieser Betriebsphase also wie ein einheitlicher Übergabetisch verhalten. Um bei parallelen Fahrspuren eine Unterbringung der Übergabetische innerhalb des von den Regalböden vorgegebenen Umrisses zu ermöglichen, kann die Breite der Übergabetische so bemessen werden, dass sie etwa der halben Tiefe der Regalböden entspricht. Durch die angesprochene Koppelung der Bewegungen der beiden Regaltische ist es dabei möglich, im Bedarfsfall auch Waren auf den Übergabetischen sicher aus dem Übernahmebereich in die Entnahmeposition zu transferieren, wenn diese (quer zur Verschieberichtung der Übergabetische gesehen) eine Längserstreckung haben, die deutlich größer als die Breite eines einzelnen Tisches ist.

In einer anderen Ausführungsform der Erfindung sind vier Übergabetische vorgesehen, von denen jeweils zwei auf einer gemeinsamen Fahrspur bewegbar sind und wobei beide Fahrspuren parallel zueinander beabstandet verlaufen. Dabei ist vorgesehen, dass jeweils zwei Übergabetische in den Übernahmebereich und die beiden anderen Übergabetische stattdessen in eine ihrer Entnahmepositionen bringbar sind. Die Beladung der Übergabetische kann wahlweise gleichzeitig an beiden Übergabetischen oder auch einzeln nacheinander erfolgen. Diese Ausführungsform der Erfindung bietet sich insbesondere dann an, wenn zwei Regalbediengeräte in derselben Regalgasse vorgesehen sind, die jeweils unabhängig voneinander betreibbar sind. Vorzugsweise sind dabei an beiden Längsseiten der Regalgasse Regale vorgesehen, die jeweils von beiden Regalbediengeräten bedient werden können. Dabei ist die Übergabevorrichtung nur bei einem der beiden Regale angeordnet. Durch den Einsatz von zwei oder vier Ablagetischen ist es möglich, je nach Betriebsweise der Anlage zumindest zwei der Ablagetische gleichzeitig in einer Entnahmeposition zu halten, so dass beide Regalbediengeräte an relativ weit voneinander beabstandeten Orten neu einzulagernde Waren von den Übergabetischen entnehmen könne, ohne sich dabei zu stören. Es ist daher im Grundsatz möglich, beide Regalbediengeräte auf ein und demselben Fahrweg, der sich über die gesamte Länge der Regalanlage erstreckt, sich bewegen zu lassen, da ein gegenseitiges Passieren der beiden Regalbediengeräte nicht unbedingt notwendig ist, um den gesamten Bereich der Regallänge bedienen zu können. Allerdings kann es in diesem Fall zu vorübergehenden gegenseitigen Behinderungen beider Regalbediengeräte kommen, die zu Lasten der Einlagerungszeit gehen. Unter Verzicht auf eine in dieser Hinsicht an sich erzielbare Reduzierung des Bauaufwandes ist daher in einer besonders bevorzugten Ausführungsform der Erfindung vorgesehen, dass beide Regalbediengeräte separate Verfahrwege aufweisen, die voneinander beabstandet sind, so dass sich die Regalbediengeräte bei ihrer Bewegung in Längsrichtung der Regale gegenseitig passieren können. In jedem Fall weisen die beiden Regalbediengeräte unabhängige Antriebssysteme auf, so dass ihre Funktionen völlig unabhängig voneinander betreibbar sind.

Wegen der unmittelbaren baulichen Auswirkungen auf die Baubreite der gesamten Regalanlage wird es bevorzugt, wenn der oder die Übergabetische innerhalb des von den Regalböden überdeckten Grundrissbereichs angeordnet sind, also entsprechend schmal ausgebildet sind. Das bedeutet, dass der Verfahrweg oder die Verfahrwege der Übergabetische möglichst innerhalb des Regals, insbesondere zwischen zwei unmittelbar übereinander angeordneten Regalböden angeordnet wird. Dadurch ergeben sich keine Auswirkungen auf die Breite der jeweiligen Regalgasse. Selbstverständlich ist es grundsätzlich möglich, dass der Übergabetisch oder die Übergabetische teilweise oder sogar vollständig außerhalb des von den Regalböden überdeckten Grundrissbereichs angeordnet sind. Dies muss dann im Regelfall mit einer Zunahme der Breite der Regalgasse erkauft werden, hat aber den Vorteil, dass ein zusätzlicher Regalboden in der Regalanlage nutzbar ist, der sonst den Übergabetischen weichen müsste.

Wie bereits vorstehend erwähnt, können für jeden Übergabetisch mehrere Entnahmepositionen vorgesehen sein. Vorzugsweise befinden sich die Entnahmepositionen, in Längsrichtung der Regalböden gesehen, im Bereich der Enden des Regals. Dies gilt insbesondere für den Fall, dass die Stelle, an die neu einzulagernden Waren von außerhalb des Regals auf einen Übergabetisch ablegbar sind, an der also die Übergabevorrichtung angeordnet und der Übernahmebereich vorgesehen ist, im Mittelbereich des Regals angeordnet ist. Selbstverständlich ist es auch möglich die Übergabevorrichtung im Bereich eines der beiden Enden des Regals vorzusehen. In diesem Fall werden zweckmäßigerweise zwei parallel zueinander verfahrbare Übergabetische vorgesehen.

Zur Gewährleistung möglichst flexibler Betriebsbedingungen sollten sämtliche Übergabetische über separate Bewegungsantriebe verfügen. Besonders kostengünstig und betriebssicher ist die Verwendung von Zugmitteln wie etwa Ketten-, Seil- oder Riemenantrieben, die eine Bewegung des jeweiligen Übergabetischs im Übernahmebereich in diskreten Schritten zur sukzessiven Beladung mit neu einzulagernden Waren und die Hin- und Herbewegung zwischen dem Übernahmebereich und einer Entnahmeposition gestatten. Alternativ kommen auch beispielsweise elektrische, pneumatische oder hydraulische Linearantriebe in Frage, gegebenenfalls auch Rotationsantriebe.

Die Übergabetische sind zweckmäßigerweise als Wagen ausgebildet, um eine geräuscharme und verschleißarme Bewegung zu gewährleisten. Alternativ kann ein Übergabetisch auch jeweils als Schlitten gestaltet sein, dessen Kufen mit Gleitflächen im Regal zusammenwirken, die eine Werkstoffpaarung mit hoher Verschleißfestigkeit und geringer Reibung bilden. Eine derartige Ausführungsform eines Übergabetisches ist insbesondere zweckmäßig, wenn das Gewicht der mit dem Übergabetisch zu transportierenden Waren eine kritische Größe erreicht und/oder die zwischen der Entnahmeposition und dem Übernahmebereich zurückzulegenden Abstände relativ groß sind. Im übrigen ist es grundsätzlich möglich, den Übergabetisch auch ohne Räder oder Rollen oder Kufen auszuführen oder beispielsweise auch mit einer Ablagefläche für die zwischenzulagernden Waren zu versehen, die aus einem gespannten flexiblen Material, insbesondere aus einer Gewebebahn oder einem Kunststoff- oder Gummistreifen gebildet ist.

Statt entlang der Regalböden hin und her verfahrbarer Übergabetische kann auch eine Mehrzahl von einzelnen Tablaren eingesetzt werden, auf denen jeweils eine Mehrzahl von Waren in jeweils definierter Zwischenablagepositionen (relativ zur Oberfläche des Tablars) aufliegen. Die Tablare werden nach ihrer Beladung in eine Entnahmeposition entlang des Regals verbracht. Hierzu kann jeder beliebige Förderer (z.B. Transportwagen, Band-, Riemen- oder Kettenförderer usw.) eingesetzt werden. In der Entnahmeposition, die im Arbeitsbereich des Regalbediengeräts liegen muss, wird das sukzessiv zu entladende Tablar so lange ortsfest gehalten (z.B. an einem Anschlag), bis alle Waren durch das Regalbediengerät von dem Tablar entnommen sind. Danach wird das Tablar in Richtung Übernahmebereich (Beladeposition) für neu einzulagernde Waren zurückgeführt. Dort kann die Beladung aber während der gesamten Zeit praktisch ohne Unterbrechung fortgesetzt werden, da mehrere Tablare zur Verfügung stehen und nach Abtransport eines Tablars sofort das nächste an dessen Stelle tritt. Dieser sukzessive Umlauf der Tablare kann leicht realisiert werden, beispielsweise über zwei parallele gegenläufige Förderstrecken, die an ihrem Anfang und Ende jeweils mittels eines sogenannten Pushers, der ein Tablar von einer Förderstrecke auf die andere schiebt, gekoppelt sind.

Gemäß der zweiten Grundvariante der vorliegenden Erfindung sind die Übergabetische, wie bereits vorstehend erwähnt, in Form von Tablaren ausgebildet. Statt einer Bewegbarkeit lediglich in einer Förderebene durch z.B. einen Seil- oder Kettenzug oder beispielsweise mittels eines Band- oder Kettenförderers ist in diesem Fall für die Bewegung der Tablare eine spezielle Ladevorrichtung als Teil der Übergabevorrichtung vorgesehen, durch die die an einer Aufgabestation neu zur Einlagerung aufgegebenen Gegenstände in den Zugriffsbereich des mindestens einen Regalbediengeräts bringbar sind. Diese Ladevorrichtung ist zwischen einer Beladeposition im Übernahmebereich und mindestens einer Entladeposition in vertikaler Richtung verfahrbar. Außerdem ist ein auf der Ladevorrichtung befindliches Tablar, das einen Teil des Pufferspeichers bildet, jeweils zur Beladung (Zwischenspeicherung) in eine Übernahmeposition auf der Ladevorrichtung verfahrbar und durch die Ladevorrichtung jeweils zur Entladung und endgültigen Speicherung von Gegenständen in eine Übergabeposition (Entnahmeposition) innerhalb des Zugriffsbereichs des Regalbediengeräts verfahrbar. Zweckmäßigerweise sind die Ladevorrichtung und die jeweilige Übergabeposition der Tablare im Bereich der Regalböden angeordnet, befinden sich also innerhalb des Lagers und vergrößern somit nicht dessen äußere Abmessungen. Dabei ist es besonders zweckmäßig, wenn eine Vielzahl von Übergabepositionen für die Tablare vorgesehen sind. Diese können vorteilhaft übereinander angeordnet sein. Dabei empfiehlt es sich, die Entnahmepositionen in verschiedenen Abständen übereinander vorzusehen, insbesondere in Form einer Rasteranordnung, so dass die tatsächlichen Abstände der Tablare untereinander wählbar sind. Günstig ist es, die Entnahmepositionen in einem Bereich vorzusehen, der sich jeweils unmittelbar an eine, vorzugsweise an beide Stirnseiten der Ladeeinrichtung anschließt. Das bedeutet also, dass die Tablare in der Entnahmeposition zur linken oder rechten oder zu beiden Seiten der Übergabevorrichtung für das Regalbediengerät bereitgestellt werden, um die zwischengelagerten Gegenstände endgültig einlagern zu können.

Zur Beladung eines Tablars ist dieses zweckmäßigerweise in der Übernahmeposition auf der Ladevorrichtung während der Beladung mit neu einzulagernden Gegenständen jeweils schrittweise verschiebbar durch einen entsprechenden Vorschubantrieb. Dadurch kann die Stelle, an der die aufgegebenen Gegenstände in den Zwischenspeicher gelangen weitgehend ortsfest gehalten werden. Wenn ein Gegenstand abgelegt wurde, kann das Tablar jeweils um ein kurzes Stück entsprechend der Breite der Ware verschoben werden, um dann den nächsten Gegenstand in gleicher Weise auflegen zu können. Zur Gewährleistung eines entsprechenden (horizontalen) Vorschubs zur jeweils nächsten Reihe kann die Ladevorrichtung zweckmäßig mit einem Schiebeschlitten ausgestattet werden, der an einer Linearführung in Längsrichtung der Ladevorrichtung parallel zur Längsrichtung der Regalböden motorisch verfahrbar ist. Das Verfahren des Schiebeschlittens wird dabei zweckmäßig mittels eines reversierbaren Zahnriemens vorgenommen. Der Schiebeschlitten selbst ist wahlweise an die einzelnen Tablare ankoppelbar und wieder von diesen abkoppelbar. Zu diesem Zweck kann der Schiebeschlitten vorteilhaft mit mindestens einer, vorzugsweise zwei Schaltkupplungen (für jede Verschieberichtung eine) versehen werden, die jeweils durch mechanischen Druck seriell betätigbar sind. Diese Schaltkupplung wirkt mit einem damit korrespondierenden Schloss im Bereich der Stirnseite der jeweiligen Tablare zusammen. Dadurch kann ein Ankoppeln ohne manuelles Eingreifen oder einen separat zu übermittelnden Steuerbefehl erfolgen, indem der Schiebeschlitten mit einer gewissen Anpresskraft auf das anzukoppelnde und z.B. durch einen Anschlag gehaltene Tablar auffährt. Das Abkoppeln kann in gleicher Weise durch erneutes Erzeugen einer entsprechenden Druckkraft (ähnlich einer Betätigung eines Druckkugelschreibers) erfolgen.

Die Tablare in der erfindungsgemäßen Vorrichtung können als im Wesentlichen flache Bleche ausgebildet sein, die besonders kostengünstig herstellbar sind und im Querschnitt gesehen einen äußerst geringen Platzbedarf erfordern. An der Unterseite können die Tablare vorteilhaft mit Gleitkufen, insbesondere Kufen aus einem verschleißfesten Kunststoff mit geringem Reibungskoeffizienten versehen sein. Die Ladevorrichtung selbst weist zweckmäßigerweise ein rahmenartiges Grundgestell auf, auf dem eine Schiebebahn mit Seitenführung für die Tablare angeordnet ist. Diese Schiebebahn kann sehr einfach z.B. in Form parallel im Abstand zueinander angeordneter Winkelprofile gestaltet sein, wobei dieser Abstand selbstverständlich der Breite der einzelnen Tablare entspricht.

Um die Ladevorrichtung vertikal verschieben zu können, damit die eine oder die Vielzahl an Übergabepositionen für die einzelnen Tablare angefahren werden können, sind mindestens zwei Vertikalführungen vorgesehen, die aus Gründen der Platzersparnis zweckmäßigerweise außerhalb des Grundrisses der Regalböden im Bereich von Vertikalträgern des Regals angeordnet sind, an denen die Regalböden direkt oder indirekt befestigt sind. Außerdem ist ein motorischer Spindeltrieb für die Vertikalverschiebung vorgesehen. Selbstverständlich könnte hierzu auch eine beliebige andere Antriebseinrichtung eingesetzt werden, beispielsweise ein pneumatischer Zylinder oder eine Kombination aus motorisch angetriebenem Zahnrad und Zahnstange oder ein Seilhubwerk oder ein sonstiger Linearantrieb.

Wenn die Tablare in der Übergabeposition in unterschiedlichen, insbesondere variierbaren Abständen übereinander abstellbar sind, ergibt sich für den Betrieb der erfindungsgemäßen Ladevorrichtung eine besondere Flexibilität. Die jeweils für ein neu beladenes Tablar zu wählende Übergabeposition kann dann nämlich individuell je nach Größe des höchsten auf dem Tablar aufliegenden Gegenstandes gewählt werden, d.h. dass mehrere in einer Übergabeposition befindliche Tablare lediglich soweit voneinander beabstandet sein müssen, wie dies dem jeweils höchsten Gegenstand auf den Tablaren entspricht. Wenn also eine Serie von Gegenständen eingelagert werden soll, die alle sehr flach sind, können die Tablare in einem engeren Höhenabstand zueinander in die jeweilige Übergabeposition abgestellt werden als in dem Fall, dass ein oder mehrere Gegenstände eine deutlich größere Höhe aufweisen. Dadurch lässt sich ein räumlich besonders kompaktes Pufferlager mit vielen Tablaren und somit insgesamt besonders großer Ablagefläche realisieren. Demgegenüber ist es bei einem Endlos-Förderer, wie er aus der DE 195 09 951 C2 bekannt ist und sich über die gesamte Länge des Lagers erstreckt, erforderlich, den freien Raum über der Förderfläche nach dem größtmöglichen Gegenstand auszurichten, der überhaupt bei der Lagerung vorkommen kann. Auf diese Weise wird vergleichsweise viel Bauraum und damit Lagerfläche verschenkt, da insbesondere bei Arzneimitteln als einzulagernde Gegenstände flache Packungen mit geringer Höhe überwiegen und großvolumige hohe Gegenstände vergleichsweise selten vorkommen. Wenn die erfindungsgemäße Lagervorrichtung darauf eingerichtet ist, dass mehrere beladene Tablare gleichzeitig zum wahlfreien Zugriff auf die zwischengespeicherten Gegenstände für das mindestens eine Regalbediengerät bereitstellbar sind, lässt sich eine besondere Flexibilität und die Möglichkeit der Berücksichtigung von vorgegebenen Kriterien für die Einlagerung erreichen.

Es liegt auf der Hand, dass es besonders vorteilhaft ist, das Regal aus zwei im Abstand unter Belassung einer Lagergasse sich gegenüberliegenden Teilregalen zu bilden. Das Regalbediengerät muss dann natürlich in der Lage sein, beide gegenüberliegenden Teilregale zu bedienen. Mit besonderem Vorteil werden in einem solchen Fall zwei Regalbediengeräte in der Lagergasse eingesetzt, wobei diese nach Möglichkeit auf separaten Fahrschienen fahren und somit praktisch völlig unabhängig voneinander betreibbar sind. Selbstverständlich ist es notwendig, dass die Steuerung beide Regalbediengeräte in ihrer Bewegung überwachen, damit ein kollisionsfreies Passieren der beiden Geräte gewährleistet ist, da zweckmäßigerweise wiederum beide Geräte beide sich gegenüberliegenden Teile des Regals bedienen können sollten. Eine Begegnung der Regalbediengeräte bei Einstellung von deren Bedienarmen (Backengreifer) auf gleiche Fahrhöhe wäre nämlich ohne Kollision nicht möglich. Der Backengreifer des Regalbediengeräts sollte eine Länge aufweisen, die zur Aufnahme nicht nur eines, sondern möglichst mehrerer Gegenstände geeignet ist.

Die Aufgabestation, an der neu aufzugebende Gegenstände (vorzugsweise von Hand) aufgelegt werden, ist zweckmäßigerweise als außerhalb des Regals angeordnetes Aufgabeband gestaltet, wobei die Transportrichtung des Aufgabebandes zweckmäßigerweise parallel zur Längsorientierung des Regals ausgerichtet ist. Das Aufgabeband wird daher an einer Längsseite des Regals vorgesehen, wo eine Öffnung in der Regalwand angeordnet ist, in deren Bereich vorteilhafterweise ein mit der Rechnersteuerung verbundener Umsetzer zur Umsetzung neu aufgegebener Gegenstände von dem Aufgabeband auf ein auf der Ladevorrichtung aufliegendes Tablar bzw. auf einen Übergabetisch installiert ist.

Dieser Umsetzer kann als kostengünstiger, einachsiger Roboter ausgebildet sein und verfügt zweckmäßigerweise über einen horizontal linear verfahrbaren Backengreifer, mit dem die Waren einzeln gegriffen und auf den Übergabetisch umgesetzt werden können. Wegen der üblicherweise quaderförmigen Verpackungsform werden die einzelnen Waren, die in beliebiger Ausrichtung dem Umsetzer zugeführt werden können, bei der Greifbewegung durch das Schließen der Greiferbacken automatisch mit jeweils zwei Längsseiten an den Greiferbacken ausgerichtet. Dies ermöglicht ein Absetzen der einzelnen Waren in ausgerichteter Form auf dem Übergabetisch bzw. Tablar.

Durch die vorliegende Erfindung wird nicht nur eine besonders hohe Nutzung des zur Zwischenspeicherung vorgesehenen Pufferlagers ermöglicht, vielmehr gestattet sie auch eine besonders leistungsfähige, also zeitsparende Einlagerung und gewährleistet darüber hinaus durch die völlige Entkopplung einzelner Verfahrensschritte eine absolut verzögerungsfreie Warenaufgabe bei der Aufgabe neu einzulagernder Gegenstände.

Nachfolgend wird die Erfindung anhand der in den Figuren dargestellten Ausführungsbeispiele näher erläutert. Es zeigen:
- Fig. 1: eine erste Grundvariante der erfindungsgemäßen Vorrichtung in Grundriss- und Längsansicht,
- Fig. 2: eine Abwandlung des Ausführungsbeispiels von Fig. 1 im Grundriss ,
- Fig. 3 - 6: verschiedene schematische Anordnungen von Übergabetischen,
- Figur 7: ein erfindungsgemäßes Lager in Draufsicht und Längsansicht,
- Figur 8: eine Variante des erfindungsgemäßen Lagers,
- Figur 9: einen Ausschnitt aus einem erfindungsgemäßen Lager mit Ladevorrichtung,
- Figur 10: eine Außenansicht eines erfindungsgemäßen Lagers und
- Figur 11: eine Ablage von Gegenständen auf einem Einlagerband gemäß Stand der Technik.

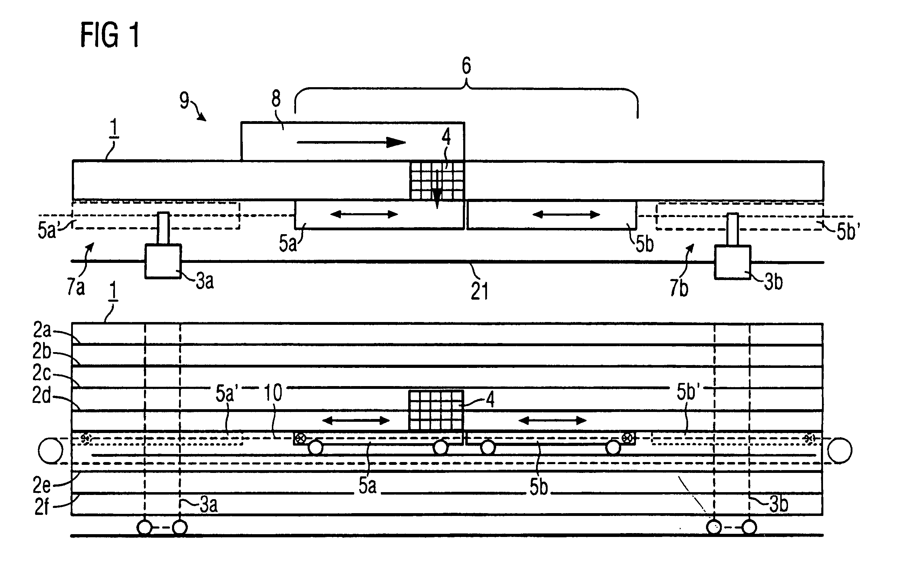

In Figur 1 ist in Form einer Schemazeichnung ein Ausführungsbeispiel für eine Vorrichtung zum unsortierten Lagern insbesondere von Arzneimittelpackungen gemäß der ersten Grundvariante der Erfindung im Grundriss (oberer Teil von Figur 1) und in einer Seitenansicht (unterer Teil von Figur 1) dargestellt. Ein Regal 1 weist mehrere übereinander angeordnete Lagerebenen in Form von durchgehenden Regalböden 2a - 2f auf. Die Regalböden 2a -2f können durch zwei einen gemeinsamen Verfahrweg 11 aufweisende Regalbediengeräte 3a, 3b, die horizontal und vertikal verfahrbar sind, bedient werden. Hierzu weisen die Regalbediengeräte 3a, 3b Manipulationseinrichtungen auf, die beispielsweise als Backengreifer oder Sauggreifer ausgebildet sein können und dem Fachmann bekannt sind, auf. Der Verfahrweg 11 erstreckt sich über die gesamte Länge des Regals 1. Die Regalbediengeräte 3a, 3b können beide praktisch über die gesamte Länge des Regals horizontal verfahren werden, können sich gegenseitig aber nicht passieren. Wenn letzteres gewünscht ist, können separate Verfahrwege 11 für die beiden Regalbediengeräte 3a, 3b vorgesehen werden, die in einem ausreichenden Abstand voneinander parallel verlaufen. Außerhalb des von den Regalböden 2a - 2f überdeckten Grundrissbereichs sind innerhalb der Lagergasse, in der die beiden Regalbediengeräte 3a, 3b verfahrbar sind, zwei Übergabetische 5a, 5b längsverschieblich angeordnet. Wie aus der Seitenansicht hervorgeht, sind die beiden Übergabetische 5a, 5b mit Rädern ausgestattet, also als Wagen ausgebildet. Sie sind motorisch über eine nicht dargestellte Steuereinrichtung, die auch die beiden Regalbediengeräte 3a, 3b steuert, in Längsrichtung des Regals 1 hin und her bewegbar. Hierzu ist ein Antrieb vorgesehen, der im dargestellten Fall schematisch in Form eines Kettenantriebs 10 ausgebildet ist. Zur Einlagerung von Waren in das Regal 1 ist außerhalb des Regals 1, d.h. auf der den Regalbediengeräten 3a, 3b abgewandten Seite des Regals 1 ein Bandförderer 8 angeordnet, auf den die Waren einzeln aufgelegt werden können. Dabei können die einzelnen Waren an einer Aufgabestation 9 beispielsweise von Hand zuvor an einem Scanner vorbeigeführt werden, um jede Ware eindeutig zu identifizieren. Jede einzelne Ware wird dann durch das Förderband 8 in Richtung des dargestellten Pfeils nach rechts weiter transportiert in den Bereich einer Übergabevorrichtung 4. Sobald eine Ware in den Arbeitsbereich eines nicht näher dargestellten Umsetzers der Übergabevorrichtung gelangt, was beispielsweise mittels ebenfalls nicht dargestellter Lichtschranken detektiert werden kann, greift der vorzugsweise als einachsiger Roboter ausgebildete Umsetzer, der über einen Backengreifer verfügen kann, die Ware und transportiert sie horizontal durch eine entsprechende Öffnung in den Regalböden 2 hindurch auf den im Übergabebereich 6 stehenden Übergabetisch 5a und legt sie in definierter Zwischenablageposition auf dem Übergabetisch 5a ab. Danach verfährt der Übergabetisch 5a ein kleines Stück, um die Aufnahme einer weiteren Ware an der relativ zum Umsetzer gleichen Stelle zu ermöglichen, die nach Zurückfahren des Umsetzers vom Bandförderer 8 geholt wird. Auf diese Weise kann sukzessive eine Befüllung des Übergabetischs 5a erfolgen. Wesentlich ist, dass die Steuereinheit die Informationen über die einzelnen Zwischenablagepositionen auf dem Übergabetisch zugeleitet bekommt und speichert. Sobald der Übergabetisch 5a einen ausreichenden Befüllungsgrad erreicht hat oder keine weiteren Waren mehr zur Einlagerung vorgesehen sind oder aber aus einem anderen Grunde der Beginn einer Einlagerung der Waren auf den Regalböden 2a - 2f oder unter Umständen sogar eine sofortige Auslagerung einzelner Waren gewünscht wird, fährt der Übergabetisch 5a auf Veranlassung der Steuereinheit in eine Entnahmeposition, die im vorliegenden Fall am linken Ende des Regals 1 vorgesehen ist (gestrichelt dargestellt) und mit 5a' bezeichnet ist. In Kenntnis einerseits der genauen Entnahmeposition 7a, also der Stelle, an der der Übergabetisch 5a während der Übernahme der einzelnen Waren durch eines der Regalbediengerät 3a, 3b verharrt, und andererseits der Zwischenablagepositionen auf dem Übergabetisch 5a kann die Steuerung das jeweilige Regalbediengerät 3a, 3b so positionieren, dass ein gezielter Zugriff auf jede der neu einzulagernden Waren auf dem Übergabetisch 5a gewährleistet ist. Sobald der Übergabetisch 5a nach links verfahren wird und den Übernahmebereich 6 räumt, kann der zweite Übergabetisch 5b in entsprechender Weise innerhalb des Übernahmebereichs 6 so positioniert werden, dass über den Umsetzer weitere Waren auf dem Übergabetisch 5b zwischengelagert werden, während das Regalbediengerät 3a den Übergabetisch 5a sukzessive leert. Grundsätzlich ist es möglich, dass auch das zweite Regalbediengerät 3b von dem Übergabetisch 5a einzelne Waren zur Einlagerung entnimmt. Es kann aber auch vorgesehen sein, dass das Regalbediengerät 3b im rechten Teil des Lagers 1 untätig verharrt oder aber beispielsweise auf entsprechende Anforderung einzelne eingelagerte Waren auslagert. Nach entsprechender Befüllung wird dann der Übergabetisch 5b aus dem Übernahmebereich 6 heraus in die entsprechende Entnahmeposition 7b verfahren, die vorzugsweise spiegelbildlich zur Entnahmeposition 7a des Übergabetischs 5a angeordnet ist, also im Bereich des rechten Endes des Regals 1 liegt. Hier kann nun in entsprechender Weise eine Einlagerung der Waren über das Regalbediengerät 3b vorgenommen werden. Nach Leerung des Übergabetischs 5a kann dieser wiederum in den Übernahmebereich 6 zur Aufnahme weiterer Waren verfahren werden, bis alle neu einzulagernden Waren bearbeitet sind.

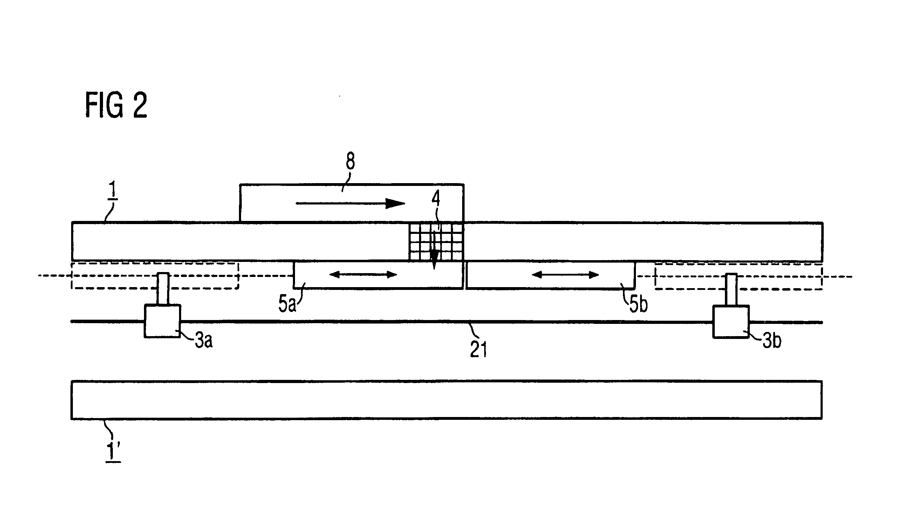

Anstelle einer Aussparung für die Übergabevorrichtung 4 im Regal 1 könnte auch vorgesehen sein, das Regal 1 in zwei Teilregale zu unterteilen, die im Abstand voneinander in Längsrichtung hintereinander angeordnet sind. Die Übergabevorrichtung 4 wäre dann im Bereich zwischen den beiden Teilregalen angeordnet. Während in Figur 1 das Regal 1 in einer einzigen Zeile angeordnet ist, ist in der Abwandlung gemäß Figur 2 vorgesehen, dass dem Regal 1 gegenüber ein zweites Regal 1' im parallelen Abstand zugeordnet wird. Die beiden Regalbediengeräte 3a, 3b sind innerhalb der zwischen den beiden Regalen 1, 1' gebildeten Lagergasse über die gesamte Länge der Regale 1, 1' verfahrbar. Beide Regalbediengeräte 3a, 3b sind vorzugsweise so ausgebildet, dass sie jeweils beide Regale 1, 1' bedienen können. Hierzu sind deren Manipulationseinrichtungen zur Handhabung der Waren um eine vertikale Drehachse verschwenkbar angeordnet. Im Übrigen ist die Funktion dieser Vorrichtung zum Lagern von Waren die gleiche wie in Figur 1.

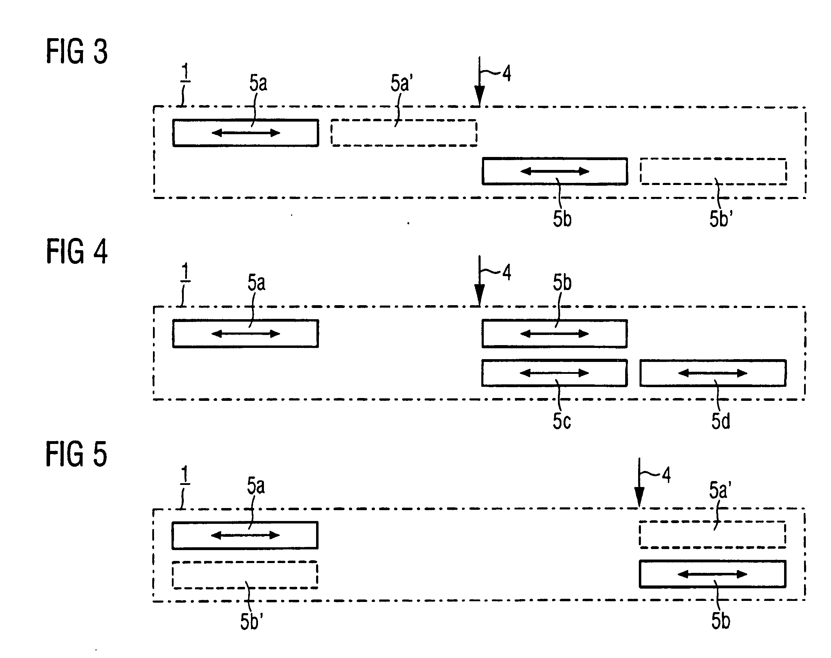

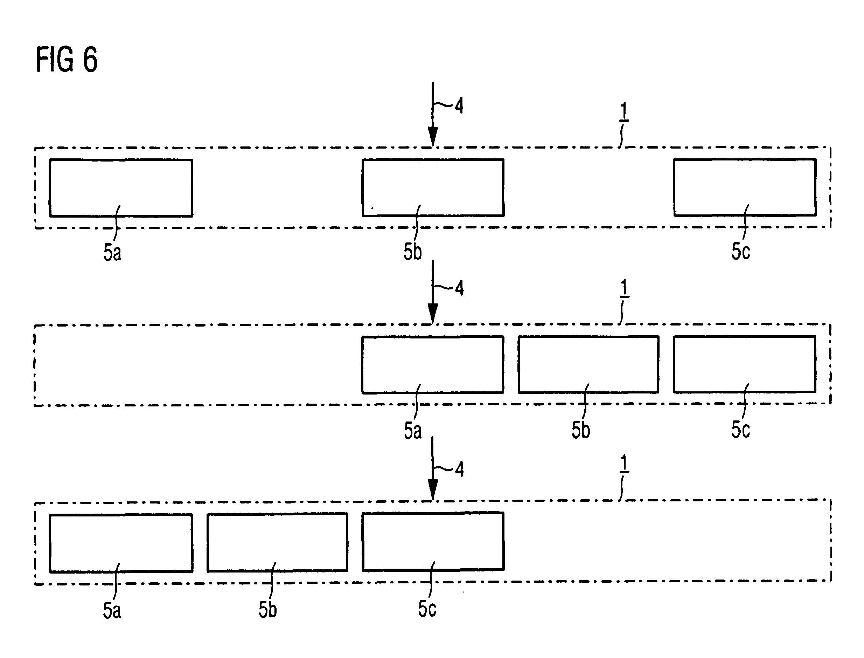

In Figur 3 sind ebenfalls wie in den Figuren 1 und 2 zwei Übergabetische 5a, 5b vorgesehen. Im Unterschied zu Figur 1 und Figur 2 sind die beiden Übergabetische 5a, 5b jedoch innerhalb des von den Regalböden des Regals 1 überdeckten Grundrissbereichs, der als strichpunktierte Linie schematisch angedeutet ist, angeordnet. Die Übergabevorrichtung 4 ist lediglich durch ein Pfeil der die Zuführrichtung der einzelnen Waren bezeichnet, angedeutet. Die Übergabevorrichtung 4 ist wiederum etwa in der Mitte des Regals 1 angeordnet. Die Breite der beiden Übergabetische 5a, 5b ist etwa halb so groß wie die Breite der Regalböden des Regals 1. Der Übergabetisch 5a befindet sich in einer Entnahmeposition und der Übergabetisch 5b innerhalb des Übernahmebereichs, kann also mit neu einzulagernden Waren bewegt werden. Die Position für die Übernahme neuer Waren durch den Übergabetisch 5a ist strichpunktiert dargestellt und mit 5a' bezeichnet. Entsprechendes gilt für den anderen Übergabetisch 5b, dessen Entnahmeposition gestrichelt dargestellt und mit 5b' bezeichnet ist. Im Unterschied zu den beiden Übergabetischen 5a und 5b in Figur 1 und Figur 2 ist in Figur 3 hinsichtlich der Fahrspuren der beiden Übergabetische 5a, 5b vorgesehen, dass diese im parallelen Abstand zueinander angeordnet sind. Daher ist es in Figur 3 möglich, dass die Übergabetische 5a, 5b aneinander vorbei und über die volle Länge des Regals 1 in beiden Richtung verfahrbar sind, wie dies beispielsweise aus Figur 5 entnehmbar ist, in der ebenfalls zwei Übergabetische 5a, 5b parallel zueinander verfahrbar vorgesehen sind. Im Unterschied zu Figur 3 ist hier jedoch die Übergabevorrichtung 4 nicht im Mittelbereich, sondern im Bereich des rechten Endes des Regals 1 angeordnet.

In Figur 4 ist eine Abwandlung von Figur 3 dargestellt, bei der auf den beiden Fahrspuren jeweils zwei Übergabetische 5a, 5b bzw. 5c, 5d vorgesehen sind. Alle vier Übergabetische 5a - 5d haben jeweils separat ansteuerbare Antriebe, können also unabhängig voneinander verfahren werden. Bei dieser Konstellation ist es möglich, dass gleichzeitig zwei Regalbediengeräte über die in einer Entnahmeposition befindlichen Übergabetische 5a, 5d mit neu einzulagernden Waren versorgt werden, während gleichzeitig von außen neue Waren zur Zwischenlagerung auf die beiden im Übernahmebereich befindlichen Übergabetische 5b, 5c aufgegeben werden können. Bei einer solchen Konstellation wird eine außerordentlich hohe Durchsatzquote hinsichtlich der Einlagervorgänge ermöglicht. Bei der Konfiguration der Übergabetische 5a - 5d gemäß Fig. 4, aber auch bei der Konfiguration gemäß Figur 3 und 5 ist es im Bedarfsfall möglich, zwei parallel nebeneinanderliegende Übergabetische (z.B. in Fig. 4 die beiden Übergabetische 5b, 5c) zeitweilig im Sinne einer elektrischen Welle völlig gleichförmig anzutreiben, so dass sie sich praktisch wie ein zusammenhängender größerer Übergabetisch verhalten. Auf diese Weise ist es ohne weiteres möglich, auch Waren mit erheblich größerer Länge, die bis in den Bereich der Breite eines Regalbodens des Regals 1 kommen kann, in Querrichtung sicher von der Übergabevorrichtung 4 aufzunehmen und an eine Stelle zu verfahren, wo sie vom Regalbediengerät zur Einlagerung in das Regal 1 übernommen werden kann. Man erkennt in Figur 4 weiter, dass eine gleichzeitige parallele Beladung der beiden Übergabetische 5b, 5c möglich ist.

Figur 6 zeigt eine weitere, besonders vorteilhafte Ausführungsform der Erfindung, bei der drei Übergabetische 5a - 5c vorgesehen sind, die einer gemeinsamen Fahrspur bewegbar sind und eine Tischbreite aufweisen, die etwa der Tiefe der Regalböden 2 des Regals 1 entspricht, so dass die Breite der Regalgasse nicht vergrößert werden muss. Diese Konfiguration hat den Vorteil, dass stets zwei der Übergabetische 5a - 5c in einer Entnahmeposition arretierbar sein können, während gleichzeitig einer im Übernahmebereich 6 zur Beladung durch den Umsetzer zur Verfügung steht und dabei die erforderlichen Vorschubbewegungen frei ausführen kann. Daher kann bei Einsatz von zwei Regalbediengeräten stets beiden jeweils ein eigener Übergabetisch zur Wareneinlagerung zugeteilt werden. Da die Übergabetische 5a - 5c sich nicht gegenseitig passieren können, kann es lediglich erforderlich werden, dass während der Entladung eines Übergabetisches 5a - 5c eine kurze Unterbrechung und ein Wechsel der Entnahmeposition erfolgen muss, um einen leeren Übergabetisch 5a - 5c in den Übernahmebereich 6 bringen zu können. Die einzelnen Positionen bei der Beladung der einzelnen Übergabetische 5a - 5c gehen aus den drei Schemadarstellungen der Figur 6 hervor.

In der oberen Darstellung befinden sich die beiden äußeren Übergabetische 5a und 5c in einer Entnahmeposition und der mittlere Tisch 5b im Übernahmebereich (Übergabevorrichtung 4). In der mittleren Darstellung ist der linke Übergabetisch 5a in den Übernahmebereich bewegt worden; die Entnahmeposition für den Übergabetisch 5b liegt in dieser Situation daher in der rechten Hälfte des Regals 1. In der unteren Darstellung ist der Übergabetisch 5c im Übernahmebereich durch die Übergabevorrichtung 4 beladbar, während die beiden anderen Übergabetische 5a und 5b jeweils auf einer Entnahmeposition in der linken Hälfte des Regals 1 gehalten werden.

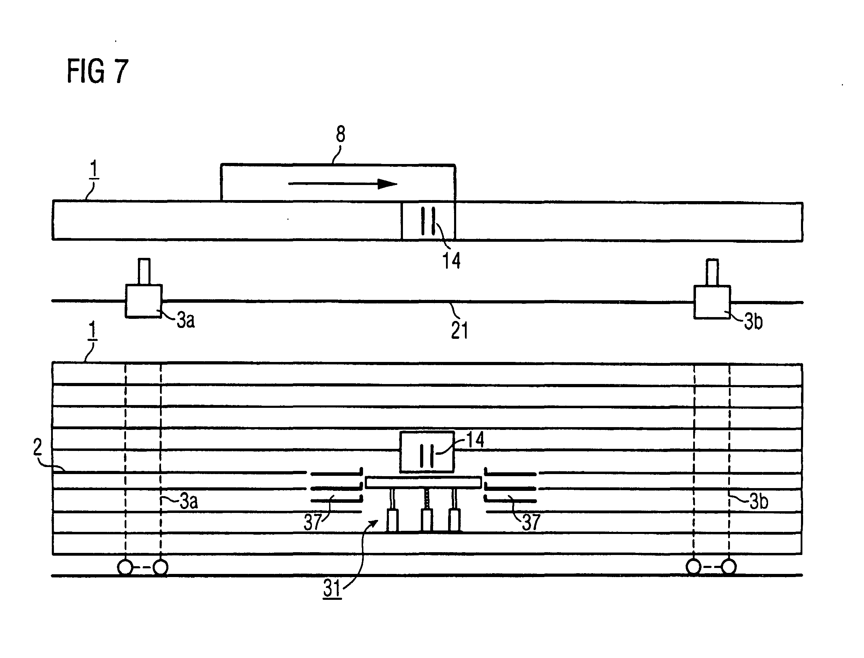

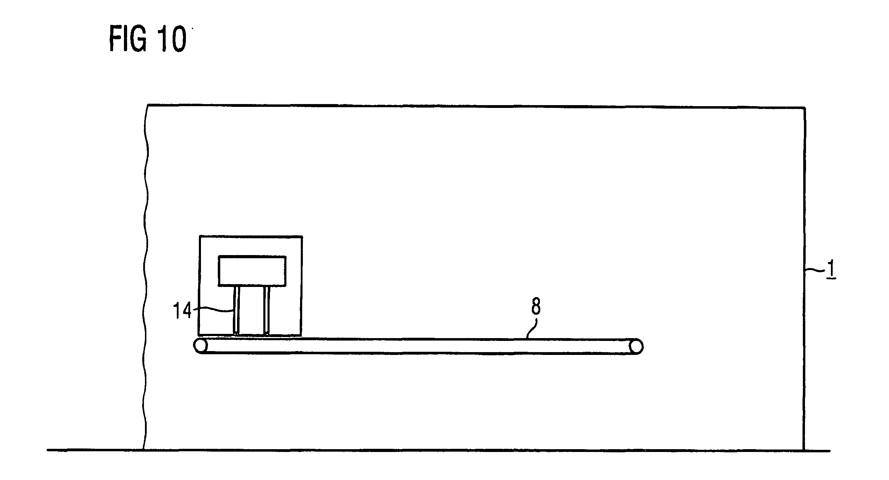

Die Figur 7 zeigt in ihrem unteren Teil eine Ansicht der Längsseite einer automatischen Regalanlage 1 gemäß der zweiten Grundvariante der Erfindung von der Innenseite her. Üblicherweise ist die gesamte Anlage in einer Einhausung untergebracht, um die gelagerten Gegenstände vor schädlichen Umwelteinflüssen zu schützen. Die Regalböden, die mit dem Bezugszeichen 2 bezeichnet sind, weisen zum Teil unterschiedliche Abstände voneinander auf, um Gegenstände unterschiedlicher Höhe darauf unterbringen zu können. Abgesehen von einem mittleren Bereich, in dem eine Ladevorrichtung 31 und eine Reihe von Tablaren 37 stirnseitig zur linken und zur rechten Seite der Ladevorrichtung 31 untergebracht sind, erstrecken sich die Regalböden 2 praktisch über die gesamte Länge der Regalanlage 1, die im oberen Teil von Figur 7 in der Draufsicht dargestellt ist. Insgesamt handelt es sich lediglich um eine schematische Darstellung, bei der die Einhausung selbst nicht gezeigt ist. Die Anlage verfügt über zwei Regalbediengeräte 3a, 3b, die im dargestellten Fall auf einer gemeinsamen Fahrschiene 21 verfahrbar sind. Neu einzulagernde Gegenstände werden z. B. von einer Bedienperson von Hand auf ein Aufgabeband 8 aufgelegt, dessen Förderrichtung durch einen Pfeil angedeutet ist und das an der Außenseite der Regalanlage 1 parallel zu deren Längserstreckung verläuft. Im mittleren Teil der Regalanlage 1 ist ein Durchbruch in deren Außenwand angeordnet, um die von außen aufgegebenen Gegenstände in das Innere der Regalanlage 1 führen zu können. Letzteres geschieht vorzugsweise in automatisierter Form durch einen Umsetzbackengreifer, wie er insbesondere von den Regalanlagen der Apostore GmbH gekannt ist. Dieser Backengreifer 14 und das Aufgabeband 8 sind in Figur 10 nochmals in einer Außenansicht auf das Gehäuse der Regalanlage 1 dargestellt.

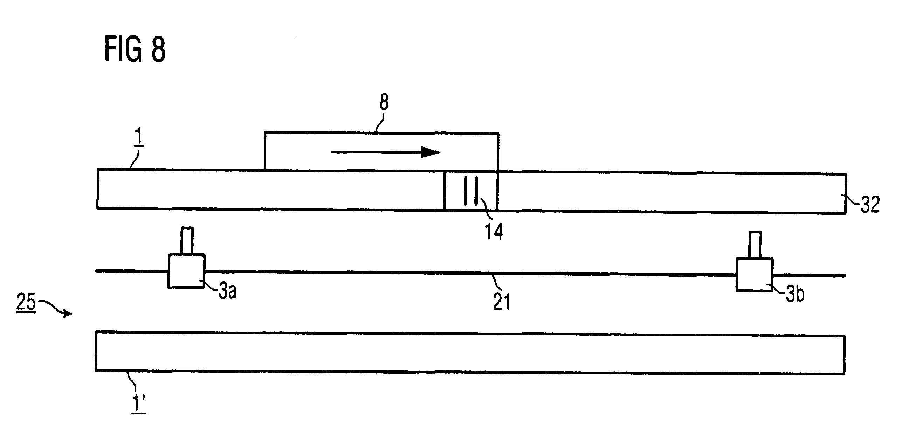

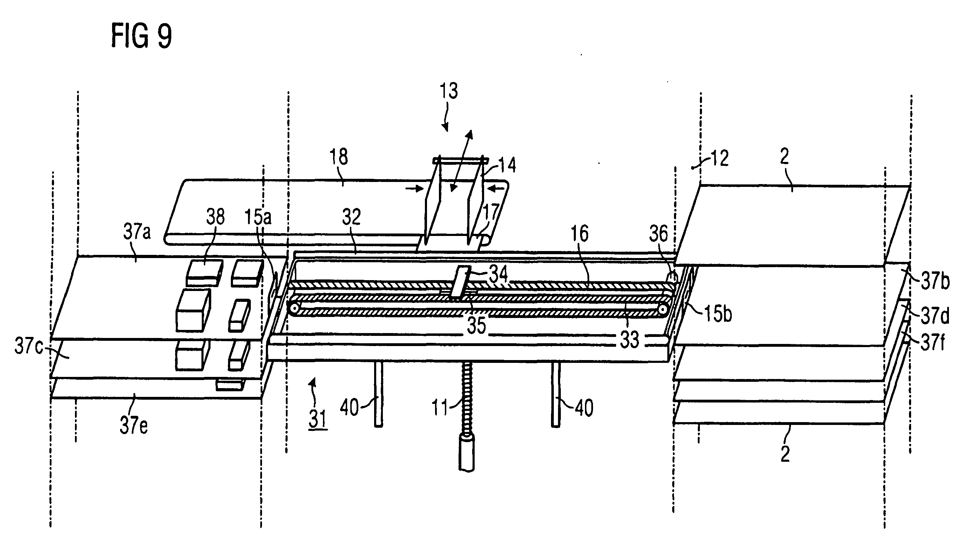

Figur 8 zeigt ähnlich wie Fig. 2 eine Variante der erfindungsgemäßen Regalanlage, die zwei einander gegenüber liegende Teilregale 1, l' aufweist. Die beiden Teilregale 1, 1' sind voneinander beabstandet, so dass zwischen ihnen eine Lagergasse 25 gebildet ist, in der eine Fahrschiene 21 für zwei Regalbediengeräte 3a, 3b verlegt ist. Zur Erhöhung der Flexibilität der gesamten Anlage sollte man zweckmäßiger Weise separate Fahrschienen 21 vorsehen, damit die beiden Regalbediengeräte 3a, 3b völlig unabhängig voneinander betrieben werden können, insbesondere kollisionsfrei einander passieren können. Wie bei allen anderen Figuren, handelt es sich auch in Figur 9 lediglich um eine schematische Darstellung der erfindungsgemäßen Anlage, in deren Mittelpunkt die Ladevorrichtung 31 steht. Letztere weist ein rahmenartiges Grundgestell auf, an dessen Oberseite im Bereich der Längsseiten eine aus Winkelprofilen gebildete Schiebebahn 32 angeordnet ist. Die Winkelprofile sind in parallelem Abstand zueinander positioniert, wobei der Abstand der Breite von Tablaren 37 entspricht, die zur Unterscheidung in Figur 9 zusätzlich mit individuellen Buchstaben a bis f gekennzeichnet sind und die Zwischenlagerfläche des Pufferlagers der Regalanlage 1 bilden. Im mittleren Bereich des Grundrahmens der Ladevorrichtung 31 erstreckt sich über die gesamte Länge der Ladevorrichtung 31 eine Linearführung 16 für einen Schiebeschlitten 34, der mittels eines durch einen Antriebsmotor 36 reversierbar angetrieben umlaufenden Zahnriemen 33, der mit dem Schiebeschlitten 34 gekoppelt ist, über die gesamte Länge der Ladevorrichtung 31 hin und her verschiebbar ist. Zur linken wie zur rechten Seite des Schiebeschlittens 34 ist jeweils eine Koppelvorrichtung 35 an dem Schiebeschlitten 34 befestigt. Die Tablare 37 sind jeweils als im Wesentlichen ebene Bleche gestaltet, an deren Unterseite nicht sichtbare Gleitkufen aus Kunststoff angebracht sind. Die Tablare 37 befinden sich zweckmäßig im unmittelbaren Anschluss an die rechte und linke Stirnseite der Ladevorrichtung 31 zu deren beiden Seiten in ihren Übergabepositionen. Auf den Tablaren 37a, 37c, 37e sind jeweils Gegenstände 38 zwischengelagert und stehen für die endgültige Einlagerung durch ein in Figur 9 nicht dargestelltes Regalbediengerät uneingeschränkt zur Verfügung. Die im rechten Teil befindlichen Tablare 37b, 37d, 37f sind dagegen leer und stehen für die Pufferspeicherung von neu aufzugebenden Gegenständen zur Verfügung. Die Tablare 37 weisen im Bereich ihrer der Ladevorrichtung 31 zugewandten Stirnseite jeweils ein Schloss 15a bzw. 15b auf, das mit der Koppeleinrichtung 5 korrespondiert. Die Tablare 37 sind in ähnlicher Weise wie die Regalböden 2 innerhalb der Regalanlage 1 angeordnet und weisen eine gleichartige Breite und Länge wie die dargestellten Teilstücke des Regalbodens 2 auf. Im Unterschied zu letzteren sind die Tablare 37 jedoch in Längsrichtung verschieblich gelagert.

Durch entsprechende Anschläge, die nicht gesondert dargestellt sind, ist die Verschieblichkeit der Tablare 37a, 37c, 37e nach links und die Verschieblichkeit der Tablare 37b, 37d, 37f nach rechts auf die in Figur 9 dargestellte Position beschränkt, d. h., sie können lediglich nach rechts bzw. nach links in den Bereich der Ladevorrichtung 31 verschoben werden. Diese Verschiebung wird in automatisierter Form ausgeführt durch den Schiebeschlitten 34. Beispielsweise durch Verfahren des Schiebeschlittens 34 nach links kann der linke Teil der Koppelvorrichtung 35 durch Anfahren des Schlosses 15a an das Tablar 37a ankoppeln, wenn der Anpressdruck durch den zahnriemengetriebenen Schiebeschlitten 34 gegen das durch einen Anschlag gehaltene Tablar 37a einen bestimmten Wert überschreitet. Hierdurch rastet die Koppelvorrichtung 35 in das Schloss 15a ein. Sobald dies geschehen ist, kann der Antriebsmotor 36 in seiner Drehrichtung umgesteuert werden, so dass das Tablar 37a auf die Schiebebahn 32 gezogen wird und in eine Übernahmeposition auf der Ladevorrichtung 31 gelangt. In entsprechender Weise kann selbstverständlich auch das Tablar 37b aus seiner rechten Endposition, die gleichzeitig Übergabeposition für die Entladung durch das nicht dargestellte Regalbediengerät ist, nach links verschoben werden. Um auch die anderen Tablare 37c, 73e bzw. 37f, 37d in entsprechender Weise auf die Ladevorrichtung 31 ziehen zu können, muss die Ladevorrichtung 31 mit ihrem Grundrahmen zuvor in eine entsprechend der jeweiligen Übergabeposition tiefere Höhenstellung gebracht werden. Hierzu ist die Ladevorrichtung 31 mit zwei Vertikalführungen 40 und einem motorisch betätigbaren Spindelantrieb 11 versehen, die jeweils mit dem Grundrahmen der Ladevorrichtung 31 gekoppelt sind. Sobald der Grundrahmen, dessen Länge etwa doppelt so groß ist, wie die Länge eines Tablars 37, ein entsprechendes Niveau wie das jeweilige Tablar 37 erreicht hat, kann die Ankopplung in der vorstehend beschriebenen Weise erfolgen.

Die in Figur 9 nicht näher dargestellte Rückwand 12 der Einhausung der Regalanlage 1 würde im Bereich der hinteren strichpunktiert dargestellten Hilfslinien liegen, die durch die hinteren Ecken der Regalböden 2 bzw. der Tablare 37 laufen. Im Bereich dieser hinteren Ecken könnten beispielsweise Vertikalträger angeordnet sein, die zur Halterung der Regalböden 2 und der Tablare 37 dienen. Im Grundsatz lassen sich durch Weglassung einzelner Regalböden 2 beliebig viele Tablare 37 in einer geeigneten Übergabeposition unterbringen, so dass im Bedarfsfall die zur Verfügung zu stellende Fläche des Pufferspeichers auf jeden gewünschten Wert vergrößerbar oder auch verkleinerbar ist. Allenfalls wäre eine Veränderung der Länge der Vertikalführungen 40 und des Spindelantriebs 11 vorzunehmen. Im Übrigen sind keine aufwendigen baulichen Anpassungen erforderlich.

Hinter der Rückwand 12 liegt parallel zur Längsrichtung der Regalböden 2 ein Aufgabeband 8, auf das die neu einzulagernden Gegenstände auflegbar sind. Einrichtungen zur Identifikation und Vermessung der Gegenstände sind in Figur 9 nicht näher dargestellt. Geeignete Einrichtungen hierzu sind dem Fachmann geläufig. Im Umsetzpunkt 13 findet die Übergabe der einzelnen neu aufgelegten, aber in Figur 9 nicht dargestellten Gegenstände statt. Hierzu ist ein Umsetzbackengreifer 14 vorgesehen, dessen Antriebe nicht im Einzelnen dargestellt sondern lediglich durch entsprechende Pfeile für die Bewegungen symbolisiert sind. Der Umsetzbackengreifer 14 kann einen Gegenstand ergreifen und richtet ihn dabei durch seine planparallelen Backen exakt aus. Der ergriffene Gegenstand wird dann über eine Überbrückungsplatte 17, welches den bestehenden Spalt zwischen dem Aufgabeband 8 und einem in Übernahmeposition auf der Ladevorrichtung 31 bereitstehenden (aber in Figur 9 nicht dargestellten) Tablar 37 abdeckt, gezogen und in nachfolgend noch näher erläuteter Weise abgelegt. Besonders zweckmäßig ist es, diese Überbrückungsplatte 17 aus einem lichtdurchlässigen Material wie etwa Glas, insbesondere Sicherheitsglas, zu fertigen, um im Bereich des Spalts beispielsweise Scanner zur Identifizierung der Gegenstände arbeiten lassen zu können.

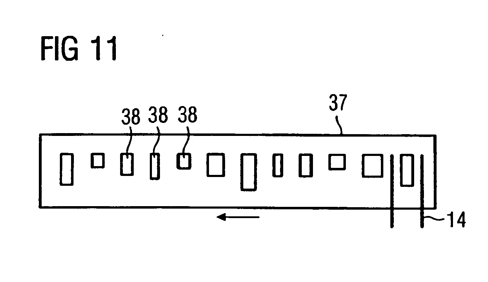

Figur 11 zeigt ein Beispiel für die Ablage einzelner Gegenstände 38 auf einem Tablar 37 durch den Umsetzbackengreifer 14.

Grundsätzlich lässt sich die erfindungsgemäße Vorrichtung auch zur Lagerung rollfähiger Gegenstände 38, also insbesondere liegender zylindrischer Gegenstände wie Flaschen oder Röhrchen verwenden. In diesem Fall müssen aber Vorkehrungen getroffen werden, die eine unbeabsichtigte Verlagerung (z.B. durch Vorschubbewegung oder Erschütterungen verursacht) der Gegenstände von ihrer Zwischenablageposition auf dem Tablar oder ihrer endgültigen Lagerposition auf dem Regalboden 2 verhindern. Auch bei Verwendung z.B. eines Aufgabebandes 8 zur Aufgabe der neu einzulagernden Gegenstände 38 dürfen diese nicht wegrollen können. Es empfiehlt sich hierzu, die Oberflächen der Regalböden und der Tablare 37 sowie gegebenenfalls auch die Oberfläche des Aufgabebandes 8 zumindest teilweise mit einer ein Wegrollen verhindernden Strukturierung, insbesondere mit quer zur Längsrichtung der Regalböden 2 bzw. der Tablare 37 bzw. quer zur Transportrichtung des Aufgabebandes 8 verlaufenden Rippen zu versehen.

Es sei noch darauf hingewiesen, dass als Vermessungseinrichtung im Rahmen der Erfindung auch eine Einrichtung anzusehen ist, die die von der Steuereinheit jeweils benötigten Angaben zu den Abmessungen der einzulagernden Waren auf indirekte Weise ermittelt, also nicht selbst im wörtlichen Sinne misst. Die Abmessungen z.B. von Arzneimittelpackungen können bereits zuvor im Sinne von Stammdaten ermittelt und in einem Datenspeicher abgelegt worden sein, aus dem sie nach Ermittlung der Identität einer Ware jeweils anhand der Identnummer abgerufen werden können.

## Patentansprüche

1. Vorrichtung zum rechnergesteuerten Ein- und Auslagern, insbesondere zum unsortierten Lagern von Waren, insbesondere von quaderförmigen Gegenständen wie Arzneimittelpackungen, mit
- mindestens einem Regal (1, 1') mit mehreren übereinander angeordneten Regalböden (2a - 2f),
- mindestens einem Regalbediengerät (3a, 3b), das zum Einlagern der Waren und zum Auslagern horizontal und vertikal entlang der Regalböden (2a - 2f) bewegbar ist,
- einer Übergabevorrichtung (4) zur Bereitstellung der an einer Aufgabestation (9) außerhalb des Regals aufgegebenen und auf den Regalböden (2a - 2f) abzulegenden Waren im Arbeitsbereich des mindestens einen Regalbediengeräts (3a, 3b),
- einer Identifizierungseinrichtung zur Identifizierung der einzulagernden Waren,
- einer Vermessungseinrichtung zur Ermittlung der für die Einlagerung benötigten Längenabmessungen der Waren und
- einer Steuereinheit für das Regalbediengerät (3a, 3b), die mit einem Datenspeicher versehen ist, insbesondere einem Datenspeicher für mindestens folgende Daten:
- vertikale Positionen der Regalböden (2a - 2f),
- Positionsdaten, die für die jeweilige horizontale Position einer abgelegten Ware in Längsrichtung des jeweiligen Regalbodens (2a - 2f) repräsentativ sind,
- erfasste Längenabmessungen der Waren,
**dadurch gekennzeichnet,**
- **dass** die Übergabevorrichtung (4) mindestens zwei Übergabetische (5a - 5d) aufweist, auf denen die neu einzulagernden Waren in definierten Zwischenablagepositionen zwischenlagerbar sind, wobei die mindestens zwei Übergabetische (5a, 5b) zwischen einem Übernahmebereich (6) für die Übernahme von neu einzulagernden Waren und mindestens einer Entnahmeposition für die Entnahme von zwischengelagerten Waren durch das Regalbediengerät (3a, 3b) bewegbar sind,
- **dass** von den Übergabetischen (5a - 5d) jeweils mindestens einer in dem Übernahmebereich (6) sukzessive in Übernahmepositionen für die Übernahme von neu einzulagernden Waren und mindestens ein anderer stattdessen jeweils in mindestens eine Entnahmeposition (7a, 7b) bringbar oder in dieser haltbar ist, und
- **dass** Mittel vorgesehen sind, die Informationen über die jeweiligen Zwischenablagepositionen in einer Weise an die Steuereinheit leiten, die einen gezielten Zugriff des mindestens einen Regalbediengeräts (3a, 3b) auf jede neu einzulagernde Ware auf dem Übergabetisch (5a - 5d) gewährleistet.

2. Vorrichtung nach Anspruch 1,
**dadurch gekennzeichnet,**
**dass** die Übergabetische (5a, 5b) zwischen dem Übernahmebereich (6) und der Entnahmeposition entlang der Regalböden (2a - 2f) bewegbar ist.

3. Vorrichtung nach Anspruch 2,
**dadurch gekennzeichnet,**
**dass** drei Übergabetische (5a - 5c) vorgesehen sind, die auf einer gemeinsamen Fahrspur bewegbar sind, wobei jeweils einer der Übergabetische (5a - 5c) zur Beladung in den Übernahmebereich (6) und die beiden anderen auf eine Entnahmeposition (7a, 7b) bringbar oder in diesen Positionen haltbar sind.

4. Vorrichtung nach Anspruch 2,
**dadurch gekennzeichnet,**
**dass** vier Übergabetische (5a - 5d) vorgesehen sind, von denen jeweils zwei auf einer gemeinsamen Fahrspur bewegbar sind und deren beide Fahrspuren beabstandet parallel zueinander verlaufen, und dass jeweils zwei Übergabetische (5a - 5d) in den Übernahmebereich (6) und die beiden anderen Übergabetisch (5) stattdessen in die jeweilige mindestens eine Entnahmeposition (7a, 7b) bringbar sind.

5. Vorrichtung nach Anspruch 2,
**dadurch gekennzeichnet**,
zwei Übergabetische (5a - 5d) vorgesehen sind, die auf parallelen voneinander beabstandeten Fahrspuren über die gesamte Länge des mindestens Regals (1) hin und her bewegbar sind, wobei die Bewegung der beiden Übergabetische (5a - 5d) wahlweise durch die Steuereinheit so miteinander koppelbar sind, dass die beiden Übergabetische (5a - 5d) einen gemeinsamen, bewegbaren Übergabetisch bilden.

6. Vorrichtung nach einem der Ansprüche 1 - 5,
**dadurch gekennzeichnet,**
**dass** die Übergabetische (5a - 5d) während der Dauer der Entnahme der zwischengelagerten Waren in ihrer Entnahmeposition (7a, 7b) arretierbar sind.

7. Vorrichtung nach einem der Ansprüche 1 - 6,
**dadurch gekennzeichnet,**
**dass** die Übergabetische (5a - 5d) innerhalb des von den Regalböden (2a - 2f) überdeckten Grundrissbereichs angeordnet sind, insbesondere zwischen zwei unmittelbar übereinander angeordneten Regalböden (2d, 2e).

8. Vorrichtung nach einem der Ansprüche 1 - 6,
**dadurch gekennzeichnet,**
**dass** die Übergabetische (5a, 5b) teilweise oder vollständig außerhalb des von den Regalböden (2a - 2f) überdeckten Grundrissbereichs angeordnet sind.

9. Vorrichtung nach einem der Ansprüche 1 - 8,
**dadurch gekennzeichnet, dass** mindestens eine Entnahmeposition (7a, 7b) der Übergabetische (5a, 5b), in Längsrichtung der Regalböden (2a - 2f) gesehen, jeweils im Bereich eines Endes des Regals (1) angeordnet ist.

10. Vorrichtung nach einem der Ansprüche 1 - 9,
**dadurch gekennzeichnet,**
**dass** die Stelle, an der die neu einzulagernden Waren von außerhalb des Regals (1) auf den jeweiligen Übergabetisch (5a - 5d) ablegbar sind, in Längsrichtung des Regals (1) gesehen, in dessen Mittelbereich angeordnet ist.

11. Vorrichtung nach einem der Ansprüche 1 - 10,
**dadurch gekennzeichnet,**
**dass** die Übergabetische (5a - 5d) mittels eines Zugmittels (10), insbesondere mittels eines Ketten-, Seil- oder Riemenantriebs zwischen der mindestens einen Entnahmeposition (7a, 7b) und dem Übernahmebereich (6) hin und her bewegbar sind.

12. Vorrichtung nach einem der Ansprüche 1 - 10,
**dadurch gekennzeichnet,**
**dass** die Übergabetische (5a - 5d) mittels eines Linearantriebs bewegbar sind.

13. Vorrichtung nach einem der Ansprüche 1 - 12,
**dadurch gekennzeichnet,**
**dass** die mindestens eine Entnahmeposition (7a, 7b) durch einen Anschlag fixierbar ist.

14. Vorrichtung nach einem der Ansprüche 1 - 13,
**dadurch gekennzeichnet,**
**dass** die Übergabetische (5a - 5d) jeweils als Wagen oder Schlitten ausgebildet sind.

15. Vorrichtung nach einem der Ansprüche 1 - 14,
**dadurch gekennzeichnet, dass** die Ablagefläche der Übergabetische (5a - 5d) jeweils aus einem gespannten flexiblen Material, insbesondere aus einer Gewebebahn oder einem Kunststoff- oder Gummistreifen gebildet ist.

16. Vorrichtung nach Anspruch 2,
**dadurch gekennzeichnet,**
**dass** als Übergabetische (5a - 5d) eine Mehrzahl von Tablaren vorgesehen ist, die mittels eines Förderers zwischen einer Beladeposition im Übernahmebereich (6) und einer im Arbeitsbereich des Regalbediengerätes (3a, 3b) liegenden Entnahmeposition sukzessiv umlaufend transportierbar sind und die Einlagerung der Waren eines jeweils zeitweilig ortsfest haltbaren Tablars durch das Regalbediengerät (3a, 3b) während der Beladung eines anderen Tablars mit weiteren Waren durchführbar ist.

17. Lager nach Anspruch 16,
**dadurch gekennzeichnet,**
**dass** der Förderer als Band-, Riemen-, oder Kettenförderer ausgebildet ist.

18. Lager nach einem der Ansprüche 16 - 17,
**dadurch gekennzeichnet,**
**dass** für den sukzessiven Umlauf der Tablare zwei parallele gegenläufige Förderstrecken vorgesehen sind mit einem Pusher am Anfang und am Ende der Förderstrecken, der jeweils ein Tablar von einer Förderstrecke auf die andere schiebt.

19. Vorrichtung nach Anspruch 1,
**dadurch gekennzeichnet,**
**dass** die Übergabevorrichtung (4) eine Ladevorrichtung (31) und als Übergabetische eine Mehrzahl von Tablaren (37) aufweist, auf denen die Gegenstände (38) zwischenlagerbar sind,
**dass** die Ladevorrichtung (31) zwischen einer Beladeposition und mindestens einer Entladeposition vertikal verfahrbar ist und
**dass** die Tablare (37) durch die Ladevorrichtung (31) jeweils zur Entladung in die Entnahmeposition innerhalb des Zugriffsbereichs des Regalbediengeräts (3a, 3b) und zur Beladung in eine Übernahmeposition im Übernahmebereich (6) auf der Ladevorrichtung (31) verfahrbar sind.

20. Vorrichtung nach Anspruch 19,
**dadurch gekennzeichnet,**
**dass** die Ladevorrichtung (31) und die jeweilige Entnahmeposition der Tablare (37) im Bereich der Regalböden (2) angeordnet sind.

21. Vorrichtung nach Anspruch 20,
**dadurch gekennzeichnet,**
**dass** eine Vielzahl von Entnahmepositionen für die Tablare (37) vorgesehen sind, die jeweils im unmittelbaren Anschluss an eine, insbesondere an beide Stirnseiten der Ladeeinrichtung (1) angeordnet sind.

22. Vorrichtung nach Anspruch 21,
**dadurch gekennzeichnet,**
**dass** mindestens zwei übereinander angeordnete Entnahmepositionen vorgesehen sind.

23. Vorrichtung nach einem der Ansprüche 19 - 22,
**dadurch gekennzeichnet,**
**dass** ein Tablar (37) in der Übernahmeposition auf der Ladevorrichtung (31) während der Beladung jeweils schrittweise verschiebbar ist.

24. Vorrichtung nach einem der Ansprüche 19 - 23,
**dadurch gekennzeichnet,**
**dass** die Ladevorrichtung (31) einen Schiebeschlitten (34) aufweist, der an einer Linearführung (16) in Längsrichtung der Ladevorrichtung (31) parallel zur Längsrichtung der Regalböden (2) motorisch verfahrbar ist, insbesondere mittels eines reversierbaren Zahnriemens (33), und dass der Schiebeschlitten (34) wahlweise an die Tablare (37) ankoppelbar und von diesen abkoppelbar ist.

25. Vorrichtung nach Anspruch 24,
**dadurch gekennzeichnet,**
**dass** der Schiebeschlitten (34) mindestens eine, insbesondere für jede Verschieberichtung jeweils eine durch mechanischen Druck seriell betätigbare Schaltkupplung (5) aufweist, die jeweils mit einem damit korrespondierenden Schloss (15a, 15b) im Bereich einer Stirnseite der Tablare (37) zusammenwirkt.

26. Vorrichtung nach einem der Ansprüche 19 - 25,
**dadurch gekennzeichnet,**
**dass** die Tablare (37) im wesentlichen als flache Bleche gebildet und an ihrer Unterseite jeweils mit Gleitkufen, insbesondere Kunststoffkufen, versehen sind.

27. Vorrichtung nach Anspruch 26,
**dadurch gekennzeichnet,**
**dass** die Ladevorrichtung (31) ein rahmenartiges Grundgestell aufweist, auf dem eine Schiebebahn (32) mit Seitenführung, insbesondere in Form parallel im Abstand zueinander angeordneter Winkelprofile, für die Tablare (37) angeordnet ist.

28. Vorrichtung nach einem der Ansprüche 19 - 27,
**dadurch gekennzeichnet,**
**dass** die Ladevorrichtung (31) durch mindestens zwei Vertikalführungen (40) geführt ist.

29. Vorrichtung nach Anspruch 8,
**dadurch gekennzeichnet,**
**dass** die Vertikalführungen (40) Platz sparend außerhalb des Grundrisses der Regalböden (2) im Bereich von Vertikalträgern des Regals (1) angeordnet sind, an denen die Regalböden (2) direkt oder indirekt befestigt sind.

30. Vorrichtung nach einem der Ansprüche 19 - 29
**dadurch gekennzeichnet,**
**dass** zur Vertikalverschiebung der Ladevorrichtung (31) ein motorischer Spindeltrieb (11) vorgesehen ist.

31. Vorrichtung nach einem der Ansprüche 19 - 30,
**dadurch gekennzeichnet,**
**dass** die Tablare (37) in der Entnahmeposition in unterschiedlichen, insbesondere in variierbaren Abständen übereinander abstellbar sind.

32. Vorrichtung nach einem der Ansprüche 19 - 31,
**dadurch gekennzeichnet,**
**dass** mehrere beladene Tablare (37) gleichzeitig zum wahlfreien Zugriff des mindestens einen Regalbediengeräts (3a, 3b) auf die zwischengespeicherten Gegenstände (38) bereitstellbar sind.

33. Vorrichtung nach einem der Ansprüche 1 - 32,
**dadurch gekennzeichnet,**
**dass** das mindestens eine Regalbediengerät (3a, 3b) mit einem Backengreifer (26) zur Aufnahme eines oder mehrerer Gegenstände (38) versehen ist.

34. Vorrichtung nach einem der Ansprüche 1 - 33,
**dadurch gekennzeichnet,**
**dass** zur Lagerung von liegenden zylindrischen Gegenständen (38) die Oberflächen der Regalböden (2) und der Tablare (37) oder Übergabetische (5a - 5d) sowie gegebenenfalls auch die Oberfläche des Aufgabebandes (8) zumindest teilweise mit einer ein Wegrollen verhindernden Strukturierung, insbesondere mit quer zur Längsrichtung der Regalböden (2) bzw. der Tablare (37) bzw. quer zur Transportrichtung des Aufgabebandes (8) verlaufenden Rippen versehen sind.

35. Vorrichtung nach einem der Ansprüche 1 - 34,
**dadurch gekennzeichnet,**
**dass** die Übergabevorrichtung (4) einen mit der Steuereinheit verbundenen Umsetzer aufweist, der die neu einzulagernden Waren außerhalb des Bereichs des Regals (1) aufnimmt und ausgerichtet auf dem mindestens einen Übergabetisch (5a - 5d) oder Tablar (37) im Übernahmebereich (6) ablegt.

36. Vorrichtung nach Anspruch 35,
**dadurch gekennzeichnet,**
**dass** der Umsetzer im Sinne eines einachsigen Roboters einen horizontal linear verfahrbaren Backengreifer (14) aufweist.

37. Vorrichtung nach einem der Ansprüche 35 - 36,
**dadurch gekennzeichnet,**
**dass** die neu einzulagernden Waren (38) außerhalb des Regals (1) über einen Förderer (8), insbesondere einen Bandförderer (Aufgabeband 8), von der Aufgabestation (9) in den Arbeitsbereich des Umsetzers förderbar sind.

38. Vorrichtung nach einem der Ansprüche 1 - 37,
**dadurch gekennzeichnet,**
**dass** das mindestens eine Regalbediengerät (3a, 3b) in einer Regalgasse zwischen zwei mit ihren Längsseiten sich gegenüberliegenden Regalen (1, 1') angeordnet ist, wobei die Übergabevorrichtung (4) im Bereich eines der beiden Regale (1, 1') angeordnet ist.

39. Vorrichtung nach einem der Ansprüche 35 - 38,
**dadurch gekennzeichnet,**
**dass** das mindestens eine Regal (1) in Längsrichtung aus zwei Teilregalen besteht, die im Abstand hintereinander angeordnet sind und wobei im Bereich zwischen den Teilregalen der Umsetzer der Übergabevorrichtung (4) vorgesehen ist.

40. Vorrichtung nach einem der Ansprüche 38 - 39,
**dadurch gekennzeichnet,**
**dass** in einer Regalgasse jeweils zwei unabhängig voneinander betreibbare Regalbediengeräte (3a, 3b) vorgesehen sind, deren Arbeitsbereich sich jeweils auf beide gegenüberliegenden Regale (1, 1') erstreckt.

41. Vorrichtung nach Anspruch 40,
**dadurch gekennzeichnet,**
**dass** die Regalbediengeräte (3a, 3b) voneinander beabstandete Verfahrwege aufweisen und sich bei ihrer Bewegung in Längsrichtung der Regale passieren können.

42. Vorrichtung nach Anspruch 40,
**dadurch gekennzeichnet,**
**dass** die beiden Regalbediengeräte (3a, 3b) nur einen gemeinsam nutzbaren Verfahrweg (21) aufweisen.

## Claims

1. Apparatus for the computer-controlled storage and retrieval, in particular for the unsorted storage of goods, in particular of parallelepipedal articles such as medicament packs, comprising
- at least one rack (1, 1') having a plurality of rack shelves (2a - 2f) arranged above one another,
- at least one storage and retrieval device (3a, 3b), which can be moved horizontally and vertically along the rack shelves (2a - 2f) in order to store and retrieve the goods,
- a transfer apparatus (4) for providing the goods fed in at a feed station (9) outside the rack and to be placed on the rack shelves (2a - 2f) in the working range of the at least one storage and retrieval device (3a, 3b),
- an identification device for the identification of the goods to be stored,
- a measuring device for determining the length dimensions of the goods needed for the storage, and
- a control unit for the storage and retrieval device (3a, 3b), which is provided with a data storage means, in particular a data storage means for at least the following data:
- vertical positions of the rack shelves (2a - 2f),
- position data which are representative of the respective horizontal position of an article placed down in the longitudinal direction of the respective rack shelf (2a - 2f),
- registered length dimensions of the goods,
**characterized**
- **in that** the transfer apparatus (4) has at least two transfer tables (5a - 5d), on which tables the goods newly to be stored can be stored temporarily in defined temporary storage positions, it being possible for the at least two transfer tables (5a, 5b) to be moved between an acceptance region (6) for the acceptance of goods newly to be stored and at least one removal position for the removal of temporarily stored goods by the storage and retrieval device (3a, 3b),
- **in that**, of the transfer tables (5a - 5d), in each case at least one can be brought successively, in the acceptance region (6), into acceptance positions for the acceptance of goods newly to be stored, and at least one other transfer table in each case can be brought into at least one removal position (7a, 7b) instead, or can be held in the latter, and
- **in that** means are provided which lead information about the respective temporary storage positions to the control unit in a way which ensures specific access by the at least one storage and retrieval device (3a, 3b) to each article newly to be stored on the transfer table (5a - 5d) .

2. Apparatus according to Claim 1, **characterized in that** the transfer tables (5a, 5b) can be moved along the rack shelves (2a - 2f) between the acceptance region (6) and the removal position.

3. Apparatus according to Claim 2, **characterized in that** three transfer tables (5a - 5c) are provided, which can be moved on a common travelling track, it being possible in each case for one of the transfer tables (5a - 5c) to be brought into the acceptance region (6) for loading and for the two others to be brought to a removal position (7a, 7b) or held in these positions.

4. Apparatus according to Claim 2, **characterized in that** four transfer tables (5a - 5d) are provided, of which in each case two can be moved on a common travelling track and their two travelling tracks run parallel to each other at a distance and, **in that** it is possible in each case for two transfer tables (5a - 5d) to be brought into the acceptance region (6) and for the two other transfer tables (5) to be brought into the respective at least one removal position (7a, 7b) instead.

5. Apparatus according to Claim 2, **characterized in that** two transfer the tables (5a - 5d) are provided, which can be moved to and fro on travelling tracks parallel to each other at a distance over the entire length of the at least one rack (1), it being possible for the movements of the two transfer tables (5a - 5d) to be coupled to one another by the control unit as desired in such a way that the two transfer tables (5a - 5d) form a common, movable transfer table.

6. Apparatus according to one of Claims 1 - 5, **characterized in that** the transfer tables (5a - 5d) can be locked in their removal position (7a, 7b) during the period of the removal of the temporarily stored goods.

7. Apparatus according to one of Claims 1 - 6, **characterized in that** the transfer tables (5a - 5d) are arranged within the region of the outline covered by the rack shelves (2a - 2f), in particular between two rack shelves (2d, 2e) arranged immediately one above the other.

8. Apparatus according to one of Claims 1 - 6, **characterized in that** the transfer tables (5a, 5b) are arranged partly or completely outside the region of the outline covered by the rack shelves (2a - 2f).

9. Apparatus according to one of Claims 1 - 8, **characterized in that** at least one removal position (7a, 7b) of the transfer tables (5a, 5b), as viewed in the longitudinal direction of the rack shelves (2a - 2f), is in each case arranged in the region of one end of the rack (1).

10. Apparatus according to one of Claims 1 - 9, **characterized in that** the point at which the goods newly to be stored can be placed on the respective transfer table (5a - 5d) from outside the rack (1), as viewed in the longitudinal direction of the rack (1), is arranged in the central region of the latter.

11. Apparatus according to one of Claims 1 - 10, **characterized in that** the transfer tables (5a - 5d) can be moved to and fro between the at least one removal position (7a, 7b) and the acceptance region (6) by means of a pulling means (10), in particular by means of a chain, cable or belt drive.

12. Apparatus according to one of Claims 1 - 10, **characterized in that** the transfer tables (5a - 5d) can be moved by means of a linear drive.

13. Apparatus according to one of Claims 1 - 12, **characterized in that** the at least one removal position (7a, 7b) can be fixed by means of a stop.

14. Apparatus according to one of Claims 1 - 13, **characterized in that** the transfer tables (5a - 5d) are each constructed as a carriage or slide.

15. Apparatus according to one of Claims 1 - 14, **characterized in that** the storage surface of the transfer tables (5a - 5d) is in each case formed from a tensioned flexible material, in particular from a woven fabric web or plastic or rubber strip.

16. Apparatus according to Claim 2, **characterized in that** a plurality of trays are provided as the transfer tables (5a - 5d), which trays can be transported successively in circulation by means of a conveyor between a loading position in the acceptance region (6) and a removal position located in the working range of the storage and retrieval device (3a, 3b), and the storage of goods by the storage and retrieval device (3a, 3b) from a tray which can respectively be held in a fixed position for some time can be carried out during the loading of another tray with further goods.

17. Apparatus according to Claim 16, **characterized in that** the conveyor is constructed as a band, belt or chain conveyor.

18. Apparatus according to one of Claims 16 - 17, **characterized in that**, for the successive circulation of the trays, two parallel conveyor sections running in opposite directions are provided with a pusher, which each push a tray from one conveyor section to the other, at the start and at the end of the conveyor sections.

19. Apparatus according to Claim 1, **characterized**
**in that** the transfer apparatus (4) has a loading apparatus (31) and, as transfer tables, a plurality of trays (37), on which the articles (38) can be stored temporarily,
**in that** the loading apparatus (31) can be moved vertically between the loading position and at least one unloading position, and
**in that** the trays (37) can be moved by the loading apparatus (31) in each case into the removal position within the access range of the storage and retrieval device (3a, 3b) for unloading and into an acceptance position in the acceptance region (6) on the loading apparatus (31) for loading.

20. Apparatus according to Claim 19, **characterized in that** the loading apparatus (31) and the respective removal position of the trays (37) are arranged in the region of the rack shelves (2).

21. Apparatus according to Claim 20, **characterized in that** a large number of removal positions for the trays (37) are provided, which are in each case arranged immediately adjacent to one end, in particular to both ends, of the loading device (1) .

22. Apparatus according to Claim 21, **characterized in that** at least two removal positions arranged one above the other are provided.

23. Apparatus according to one of Claims 19 - 22, **characterized in that** during the loading, in each case one tray (37) can be displaced step by step in the acceptance position on the loading apparatus (31).

24. Apparatus according to one of Claims 19 - 23, **characterized in that** the loading apparatus (31) has a slide (34) which can be moved by motor on a linear guide (16) in the longitudinal direction of the loading apparatus (31), parallel to the longitudinal direction of the rack shelves (2), in particular by means of a reversible toothed belt (33), and **in that** the slide can optionally be coupled to the trays and uncoupled from the latter again.

25. Apparatus according to Claim 24, **characterized in that** the slide (34) has at least one, in particular one in each case for each displacing device, controllable clutch (5) which can be actuated serially by mechanical pressure and which in each case interacts with a lock (15a, 15b) corresponding thereto in the region of a front of the trays (37).

26. Apparatus according to one of Claims 19 - 25, **characterized in that** the trays (37) are substantially formed as flat metal sheets and are each provided on the underside with sliding skids, in particular plastic skids.

27. Apparatus according to Claim 26, **characterized in that** the loading apparatus (71) has a frame-like basic framework, on which there is arranged a sliding track (32) with lateral guidance for the trays (37), in particular in the form of angled profiles arranged parallel to one another at a distance.

28. Apparatus according to one of Claims 19 - 27, **characterized in that** the loading apparatus (31) is guided by at least two vertical guides (40).

29. Apparatus according to Claim 8, **characterized in that** the vertical guides (40) are arranged in a space-saving manner outside the outline of the rack shelves (2) in the region of vertical supports of the rack (1), to which the rack shelves (2) are fixed, directly or indirectly.

30. Apparatus according to one of Claims 19 - 29, **characterized in that** a motorized spindle drive (11) is provided for the vertical displacement of the loading apparatus (31).

31. Apparatus according to one of Claims 19 - 30, **characterized in that** the trays (7) can be set down one above another in the removal position at different distances, in particular at variable distances.

32. Apparatus according to one of Claims 19 - 31, **characterized in that** a plurality of loaded trays (37) can be provided simultaneously for the random access of the at least one storage and retrieval device (3a, 3b) to the temporarily stored articles (38).

33. Apparatus according to one of Claims 1 - 32, **characterized in that** at least one storage and retrieval device (3a, 3b) is provided with a jaw gripper (26) in order to accommodate one or more articles (38).

34. Apparatus according to one Claims 1 - 33, **characterized in that**, in order to store lying cylindrical articles (30), the surfaces of the rack shelves (2) and of the trays (37) or transfer tables (5a - 5d) and, if necessary, also the surface of the belt feeder (8) are at least to some extent provided with structuring preventing rolling away, in particular with ribs running transversely with respect to the longitudinal direction of the rack shelves (2) and of the trays (37) and transversely with respect to the transport direction of the belt feeder (8).

35. Apparatus according to one of Claims 1 - 34, **characterized in that** the transfer apparatus (4) has a transposer which is connected to the control unit, which picks up the goods newly to be stored outside the region of the rack (1) and places them in an aligned manner on the at least one transfer table (5a - 5d) or tray (37) in the acceptance region (6).

36. Apparatus according to Claim 35, **characterized in that** the transposer has a jaw gripper (14) that can be moved linearly horizontally in the sense of a single-axis robot.

37. Apparatus according to one of Claims 35 - 36, **characterized in that** the goods (38) newly to be stored can be conveyed from a feed station (9) into the working range of the transposer outside the rack (1) by a conveyor (8), in particular a belt conveyor (belt feeder 8).

38. Apparatus according to one of Claims 1 - 37, **characterized in that** the at least one storage and retrieval device (3a, 3b) is arranged in a rack aisle between two racks (1, 1') with their long sides mutually opposite, the transfer apparatus (4) being arranged in the region of one of the two racks (1, 1').

39. Apparatus according to one of Claims 35 - 38, **characterized in that** the at least one rack (1) consists in the longitudinal direction of two part racks, which are arranged one behind the other at a distance, and the transposer of the transfer apparatus (4) being provided in the region between the part racks.

40. Apparatus according to one of Claims 38 - 39, **characterized in that** in each case two storage and retrieval devices (3a, 3b) which can be operated independently of each other and whose working range in each case extends to both opposite racks (1, 1') are provided in a rack aisle.

41. Apparatus according to Claim 40, **characterized in that** the storage and retrieval devices (3a, 3b) have travel paths spaced apart from each other and are able to pass each other during their movement in the longitudinal direction of the racks.

42. Apparatus according to Claim 40, **characterized in that** the two storage and retrieval devices (3a, 3b) have only one travel path (21), which can be used jointly.

## Revendications

1. Dispositif pour stocker et déstocker par ordinateur, en particulier pour stocker sans les trier des marchandises, en particulier des objets parallélépipédiques comme des emballages de médicaments, comportant
- au moins un rayonnage (1, 1') ayant plusieurs sols de rayonnage (2a à 2f) placés les uns au-dessus des autres,
- au moins un appareil (3a, 3b) desservant les rayonnages qui peut se déplacer horizontalement et verticalement le long des sols de rayonnage (2a à 2f) pour stocker et pour déstocker les marchandises,
- un dispositif de transfert (4) pour fournir, dans la zone de travail de l'au moins un appareil (3a, 3b) de desserte, les marchandises qui sont chargées à l'extérieur du rayonnage à un poste de chargement (9) et qui doivent être déposées sur les sols de rayonnage (2a à 2f),
- une installation d'identification pour identifier les marchandises à stocker,
- une installation de mesure pour déterminer les dimensions en longueur des marchandises nécessaires pour le stockage et
- une unité de commande de l'appareil (3a, 3b) de desserte et munie d'une mémoire de données, en particulier d'une mémoire de données au moins pour des données suivantes :
- des positions verticales des sols de rayonnage (2a à 2f),
- des données de position, représentatives de la position horizontale d'une marchandise déposée dans le sens de la longueur du sol de rayonnage (2a à 2f) respectif,
- des dimensions en longueur détectées des marchandises,
**caractérisé en ce que**
- le dispositif de transfert (4) a au moins deux tables de transfert (5a à 5d) sur lesquelles les marchandises à stocker nouvellement peuvent être stockées temporairement dans des positions définies de dépôt intermédiaire, les au moins deux tables de transfert (5a, 5b) étant mobiles entre une zone de prise en charge (6) pour la prise en charge de marchandises à stocker nouvellement et au moins une position de retrait pour le retrait des marchandises temporairement stockées par l'appareil (3) de desserte,
- dans la zone de prise en charge (6), au moins l'une des tables de transfert (5a à 5d) peut être respectivement mise ou maintenue successivement dans des positions de prise en charge pour prendre en charge des marchandises à stocker nouvellement et au lieu de cela au moins un autre peut être respectivement mis ou maintenu dans au moins une position de retrait (7a, 7b) et
- il est prévu des moyens qui transmettent à l'unité de commande des informations sur les positions de dépôt intermédiaire respectives, d'une façon qui assure que l'au moins un appareil (3a, 3b) ait un accès sélectif à chaque marchandise à stocker nouvellement placée sur la table de transfert (5a à 5d).

2. Dispositif selon la revendication 1, **caractérisé en ce que** les plateaux de transfert (5a, 5b) peuvent se déplacer le long des sols de rayonnage (2a à 2f) entre la zone de prise en charge (6) et la position de retrait.

3. Dispositif selon la revendication 2, **caractérisé en ce qu'**il est prévu trois plateaux de transfert (5a à 5c) mobiles sur une voie de circulation commune, à chaque fois un des plateaux de transfert (5a à 5c) peut être apportée dans la zone de prise en charge (6) pour assurer le chargement et les deux autres dans une position de retrait (7a, 7b) ou ils peuvent être maintenus dans ces positions.

4. Dispositif selon la revendication 2, **caractérisé en ce qu'**il est prévu quatre plateaux de transfert (5a à 5d), dont deux sont respectivement mobiles sur une voie de circulation commune et leurs deux voies de circulation sont parallèles et à distance l'une de l'autre et qu'à chaque fois deux plateaux de transfert (5a à 5d) peuvent être apportées dans la zone de prise en charge (6), alors que les deux autres plateaux de transfert (5) le sont dans l'au moins une position de retrait (7a, 7b) correspondante.

5. Dispositif selon la revendication 2, **caractérisé en ce qu'**on prévoit deux plateaux de transfert (5a à 5d) qui peuvent aller et venir, sur toute la longueur de l'au moins un rayonnage (1), sur des voies de circulation parallèles à distance l'une de l'autre, l'unité de commande pouvant coupler au choix le mouvement des deux plateaux de transfert (5a à 5d) de telle manière que les deux plateaux de transfert (5a à 5d) forment un plateau de transfert mobile commun.

6. Dispositif selon l'une des revendications 1 à 5, **caractérisé en ce que** les plateaux de transfert (5a à 5d) peuvent être bloquées dans leur position de retrait (7a, 7b) pendant la durée de retrait des marchandises temporairement stockées.

7. Dispositif selon l'une des revendications 1 à 6, **caractérisé en ce que** les plateaux de transfert (5a à 5d) se trouvent à l'intérieur de la zone de plan horizontal recouverte par les sols de rayonnage (2a à 2f), en particulier entre deux sols de rayonnage (2a à 2e) qui se trouvent l'un juste sur l'autre.

8. Dispositif selon l'une des revendications 1 à 6, **caractérisé en ce que** les plateaux de transfert (5a, 5b) sont placés en partie ou en totalité à l'extérieur de la zone de plan horizontal recouverte par les sols de rayonnage (2a à 2f).

9. Dispositif selon l'une des revendications 1 à 8, **caractérisé en ce que**, quand on regarde dans le sens longitudinal des sols de rayonnage (2a à 2f), au moins une position de retrait (7a, 7b) des plateaux de transfert (5a, 5b) est placée dans la zone d'une extrémité du rayonnage (1).

10. Dispositif selon l'une des revendications 1 à 9, **caractérisé en ce que**, quand on regarde dans le sens longitudinal du rayonnage (1), l'endroit où les marchandises à stocker nouvellement peuvent être déposées de l'extérieur du rayonnage (1) sur le plateau de transfert (5a à 5d) concerné se trouve dans sa zone centrale.

11. Dispositif selon l'une des revendications 1 à 10, **caractérisé en ce que** les plateaux de transfert (5a à 5d) peuvent aller et venir entre l'au moins une position de retrait (7a, 7b) et la zone de prise en charge (6) à l'aide d'un moyen de traction (10), en particulier à l'aide d'un entraînement à chaîne, à câble ou à courroie.

12. Dispositif selon l'une des revendications 1 à 10, **caractérisé en ce que** les plateaux de transfert (5a à 5d) peuvent être déplacés à l'aide d'un entraînement linéaire.

13. Dispositif selon l'une des revendications 1 à 12, **caractérisé en ce que** l'au moins une position de retrait (7a, 7b) peut être définie par une butée.

14. Dispositif selon l'une des revendications 1 à 13, **caractérisé en ce que** les plateaux de transfert (5a à 5d) consistent chacun en une voiture ou un chariot.

15. Dispositif selon l'une des revendications 1 à 14, **caractérisé en ce que** chaque surface de dépôt sur les plateaux de transfert (5a à 5d) est en un matériau flexible tendu, en particulier en une bande de tissu ou en une bande de matière plastique ou de caoutchouc.

16. Dispositif selon la revendication 2, **caractérisé en ce qu'**il est prévu comme plateaux de transfert (5a à 5d) un grand nombre d'étages, qu'un convoyeur peut successivement transporter par rotation entre une position de chargement dans la zone de prise en charge (6) et une position de retrait dans la zone de travail de l'appareil (3a, 3b)de desserte et les marchandises d'un étage donné, qui peut être maintenu immobile un certain temps, sont stockées par l'appareil (3a, 3b) de desserte pendant qu'on charge d'autres marchandises dans un autre étage.

17. Magasin selon la revendication 16, **caractérisé en ce que** le convoyeur est un convoyeur à bande, à courroie ou à chaîne.

18. Magasin selon l'une des revendications 16 ou 17, **caractérisé en ce que** pour faire tourner successivement les étages on prévoit deux trajets de convoyage, parallèles et en sens contraire, un poussoir qui pousse respectivement un étage depuis un trajet de convoyage sur l'autre se trouvant au début et à la fin des trajets de convoyage.

19. Dispositif selon la revendication 1, **caractérisé en ce que** le dispositif de transfert (4) comporte un dispositif de chargement (31) et un grand nombre d'étages (37) sur lesquels les objets (38) peuvent être stockés temporairement servent de plateaux de transfert, que le dispositif de chargement (31) peut se déplacer verticalement entre une position de chargement et au moins une position de déchargement et que, grâce au dispositif de chargement (31), les étages (37) peuvent se déplacer sur le dispositif de chargement (31) pour procéder respectivement au déchargement dans la position de retrait à l'intérieur de la zone d'accès de l'appareil (3a, 3b) de desserte et au chargement dans une position de prise en charge sur le dispositif (31) de chargement dans la zone de prise en charge (6).

20. Dispositif selon la revendication 19, **caractérisé en ce que** le dispositif de chargement (31) et chaque position de retrait des étages (37) se trouvent dans la zone des sols de rayonnage (2).

21. Dispositif selon la revendication 20, **caractérisé en ce qu'**il est prévu pour les étages (37) un grand nombre de positions de retrait, qui se suivent immédiatement sur un côté frontal du dispositif de chargement (31), en particulier sur ses deux côtés frontaux.

22. Dispositif selon la revendication 21, **caractérisé en ce qu'**il est prévu au moins deux positions de retrait l'une au-dessus de l'autre.

23. Dispositif selon l'une des revendications 19 à 22, **caractérisé en ce que**, pendant le chargement, chaque étage (37) peut être poussé pas à pas en position de prise en charge sur le dispositif de chargement (31).

24. Dispositif selon l'une des revendications 19 à 23, **caractérisé en ce que** le dispositif de chargement (31) comporte un chariot coulissant (34) qui peut se déplacer par moteur sur un guidage linéaire (16) dans le sens longitudinal du dispositif de chargement (31) parallèlement au sens longitudinal des sols de rayonnage (2), en particulier à l'aide d'une courroie dentée (33) réversible et **en ce que** le chariot coulissant (34) peut être à volonté couplé aux étages (37)ou en être découplé.

25. Dispositif selon la revendication 24, **caractérisé en ce que** le chariot coulissant (34) comporte au moins un embrayage (5), en particulier un embrayage pour chaque sens de déplacement, qui peut être actionné en série par pression mécanique et qui coopère respectivement avec un verrou (15a, 15b) correspondant dans la zone d'un côté frontal des étages (37).

26. Dispositif selon l'une des revendications 19 à 25, **caractérisé en ce que** les étages (37) sont essentiellement des tôles plates et leur côté inférieur est respectivement muni de patins, en particulier de patins en matière plastique.

27. Dispositif selon la revendication 26, **caractérisé en ce que** le dispositif de chargement (31) comporte un bâti de base sur lequel est placée une coulisse (32) comportant un guidage latéral pour les étages (37), en particulier sous forme de profilés en équerre parallèles et à distance l'un de l'autre.

28. Dispositif selon l'une des revendications 19 à 27, **caractérisé en ce que** le dispositif de chargement (31) est guidé par au moins deux guidages verticaux (40).

29. Dispositif selon la revendication 8, **caractérisé en ce que**, pour gagner de la place, les guidages verticaux (40) se trouvent à l'extérieur du plan horizontal des sols de rayonnage (2) dans la zone des supports verticaux du rayonnage (1), les sols de rayonnage (2) étant fixés directement ou indirectement à ces supports verticaux.

30. Dispositif selon l'une des revendications 19 à 29, **caractérisé en ce qu'**un mécanisme motorisé à broche (11) est prévu pour déplacer verticalement le dispositif de chargement (1) .

31. Dispositif selon l'une des revendications 19 à 30, **caractérisé en ce que**, en position de retrait, les étages (37) peuvent être arrêtés l'un au-dessus de l'autre à différentes distances, en particulier à des distances modifiables.

32. Dispositif selon l'une des revendications 19 à 31, **caractérisé en ce que** plusieurs étages (37) chargés peuvent être fournis en même temps pour que l'au moins un appareil (3a, 3b) de desserte ait accès à volonté aux objets (38) stockés temporairement.

33. Dispositif selon l'une des revendications 1 à 32, **caractérisé en ce que** l'au moins un appareil (3a, 3b) de desserte est muni d'un organe préhenseur (26) pour prendre un ou plusieurs objets (38.

34. Dispositif selon l'une des revendications 1 à 33, **caractérisé en ce que**, pour stocker des objets (38) cylindriques horizontaux, les surfaces des sols de rayonnage (2) et des étages (37) ou des plateaux de transfert (5a à 5d), ainsi que, le cas échéant, aussi les surfaces de la bande de remise (8) sont au moins en partie munies d'une structure qui empêche de rouler, en particulier munies de nervures transversales au sens longitudinal des sols de rayonnage (2) ou des étages (37) ou transversales à la direction de transport de la bande de remise (8).

35. Dispositif selon l'une des revendications 1 à 34, **caractérisé en ce que** le dispositif de transfert (4) comporte un convertisseur, relié à l'unité de commande, qui reçoit à l'extérieur de la zone du rayonnage (1) les marchandises à stocker nouvellement et les dépose orientées dans la zone de prise en charge (6) sur l'au moins un plateau de transfert (5a à 5d) ou l'étage (37).

36. Dispositif selon la revendication 35, **caractérisé en ce que** le convertisseur, au sens d'un robot à un axe, comporte un organe préhenseur (14) qui peut se déplacer linéairement à l'horizontale.

37. Dispositif selon l'une des revendications 35 ou 36, **caractérisé en ce que**, à l'extérieur du rayonnage (1), les marchandises (38) à stocker nouvellement peuvent être convoyées depuis le poste de remise (9) jusque dans la zone de travail du convertisseur par un convoyeur (8), en particulier par un convoyeur à bande (bande de remise 8).

38. Dispositif selon l'une des revendications 1 à 37, **caractérisé en ce que** l'au moins un appareil (3a, 3b) de desserte se trouve dans une allée de rayonnage entre deux rayonnages (1, 1') dont les grands côtés se font face, le dispositif de transfert (4) se trouvant dans la zone d'un des deux rayonnages (1, 1').

39. Dispositif selon l'une des revendications 35 à 38, **caractérisé en ce que**, en sens longitudinal, l'au moins un rayonnage (1) consiste en deux sous-rayonnages placés à distance l'un derrière l'autre et le convertisseur du dispositif de transfert (4) est prévu dans la zone entre les sous-rayonnages.

40. Dispositif selon l'une des revendications 38 ou 39, **caractérisé en ce que** deux appareils (3a, 3b) de desserte qui peuvent fonctionner indépendamment l'un de l'autre se trouvent dans chaque allée de rayonnages et leur zone de travail comprend respectivement les deux rayonnages (1, 1') qui se font face.

41. Dispositif selon la revendication 40, **caractérisé en ce que** les appareils (3a, 3b) de desserte ont des trajectoires à distance l'une de l'autre et quand ils se déplacent ils peuvent passer l'un devant l'autre dans le sens longitudinal des rayonnages.

42. Dispositif selon la revendication 40, **caractérisé en ce que** les deux appareils (3a, 3b) de desserte n'ont qu'une trajectoire (21) commune exploitable.
